# EUROPÄISCHE PATENTSCHRIFT

(11) **EP 4 441 873 B1**
(45) Veröffentlichungstag und Bekanntmachung des Hinweises auf die Patenterteilung: **06.08.2025**
(21) Anmeldenummer: 22808966.0
(22) Anmeldetag: 15.11.2022
(51) Int. Cl.: H02K 7/102, H02K 7/116, F16H 57/029, F16H 57/027, H02G 3/22

(54) **ANTRIEB, AUFWEISEND EIN GETRIEBE MIT EINEM GETRIEBEGEHÄUSE, EINE ELEKTROMAGNETISCH BETÄTIGBARE BREMSANORDNUNG UND EINEN ELEKTROMOTOR**
DRIVE HAVING A TRANSMISSION WITH A TRANSMISSION HOUSING, AN ELECTROMAGNETICALLY ACTUATABLE BRAKE ASSEMBLY AND AN ELECTRIC MOTOR
ENTRAÎNEMENT COMPRENANT UNE TRANSMISSION MUNIE D'UN CARTER DE TRANSMISSION, ENSEMBLE FREIN À ACTIONNEMENT ÉLECTROMAGNÉTIQUE ET MOTEUR ÉLECTRIQUE

(30) Priorität: 30.11.2021 CN 202111442280; 17.01.2022 DE 102022000158
(43) Veröffentlichungstag der Anmeldung: 09.10.2024
(73) Patentinhaber: SEW-EURODRIVE GmbH & Co. KG, 76646 Bruchsal (DE)
(72) Erfinder: JINCHANG, Li, Tianjin (CN)
(86) Internationale Anmeldenummer: PCT/EP2022/025511
(87) Internationale Veröffentlichungsnummer: WO 2023/099023

(56) Entgegenhaltungen:
- EP-A1- 1 549 546
- EP-A1- 1 549 546
- US-A1- 2019 296 504
- US-A1- 2019 296 504
- US-B1- 6 328 655
- US-B1- 6 328 655

## Beschreibung

Die Erfindung betrifft einen Antrieb, aufweisend ein Getriebe mit einem Getriebegehäuse, eine elektromagnetisch betätigbare Bremsanordnung und einen Elektromotor.

Es ist allgemein bekannt, dass ein Antrieb ausbildbar ist durch ein von einem Elektromotor angetriebenes Getriebe.

Aus der EP 2 677 197 A1 ist als nächstliegender Stand der Technik ein Getriebe bekannt.

Aus der DE 10 2014 018 485 B3 ist eine elektromagnetisch betätigbare Bremse bekannt.

Aus der US 2021/ 0 131 512 A1 ist eine elektromagnetisch betätigbare Bremsanordnung bekannt.

Aus der DE 79 28 392 U1 ist eine hermetisch dichte Einführung für einen Kabelbaum bekannt.

Aus der DE 10 2010 049 748 A1 ist ein Elektromotor bekannt.

Aus der DE 10 2010 049 747 A1 ist ein Bausatz zur Herstellung unterschiedlicher Elektromotoren bekannt.

Aus der DE 10 2010 0449 744 A1 ist eine Bremse bekannt.

Aus der DE 10 2019 003 545 A1 ist ein Adapter für einen Antrieb bekannt.

Aus der DE 10 2019 003 546 A1 ist ein Antrieb mit Adapter bekannt.

**Aus der** US 6 328 655 B1 **ist als nächstliegender Stand der Technik ein Adaptersystem bekannt.**

**Aus der** US 2019/296504 A1 **ist eine Verbindungsanordnung bekannt.**

**Aus der** EP 1 549 546 A1 **ist ein System zum Beobachten eines Flüssigkeitspegels bekannt.**

Der Erfindung liegt daher die Aufgabe zugrunde, erhöhte Sicherheit bei einem Antrieb zu erreichen.

Erfindungsgemäß wird die Aufgabe bei dem Antrieb nach den in Anspruch 1 angegebenen Merkmalen gelöst.

Wichtige Merkmale bei dem Antrieb sind, dass der Antrieb ein Getriebe mit einem Getriebegehäuse, eine elektromagnetisch betätigbare Bremsanordnung und einen Elektromotor aufweist, wobei die Bremsanordnung zwischen dem Getriebe und dem Elektromotor angeordnet ist,
wobei in einem ersten Gehäuseteil der Bremsanordnung ein erstes Lager und in einem zweiten Gehäuseteil der Bremsanordnung ein zweites Lager aufgenommen ist,
wobei eine Welle mittels des ersten und zweiten Lagers drehbar gelagert ist,
wobei die Welle mit einem Verzahnungsteil des Getriebes, insbesondere mit einem Verzahnungsteil, insbesondere Aufsteckritzel, der ersten Getriebestufe des Getriebes, drehfest verbunden ist oder einstückig, insbesondere also einteilig, mit diesem Verzahnungsteil ausgeführt ist,
wobei die Welle durch einen Magnetkörper, insbesondere durch einen ferromagnetischen Spulenkörper, der Bremsanordnung hindurchragt,
wobei die Welle drehfest mit einem Bremsbelagträger verbunden ist, der in axialer Richtung zwischen dem ersten und dem zweiten Lager angeordnet ist,
wobei im ersten Gehäuseteil eine Kabeldurchführung angeordnet ist, welche eine Schraubmutter und ein Dichtelement aufweist, wobei das Dichtelement in eine Stufenbohrung eingesteckt ist und die Schraubmutter in eine Gewindebohrung des ersten Gehäuseteils eingeschraubt ist,
wobei die Gewindebohrung koaxial zur Stufenbohrung ausgerichtet ist,
wobei die Schraubmutter am Dichtelement ansteht,
insbesondere wobei das Dichtelement aus Gummi oder aus Kunststoff gefertigt ist, wobei der Bremsbelagträger zur Welle relativ verschiebbar angeordnet ist insbesondere parallel zur Drehachse der Welle.

Von Vorteil ist dabei, dass eine erhöhte Sicherheit erreichbar ist. Denn hierzu ist ein Dichtelement vorgesehen, das in einer Stufenbohrung steckt und von einer Schraubmutter mit Kraft beaufschlagt wird. Dadurch ist das Dichtelement derart elastisch verformbar, dass das Dichtelement an seinem äußeren Umfang dicht an der Wandung der Stufenbohrung anliegt und auch dicht an den durch das Dichtelement durchgeführten Kabel nun den durch das Dichtelement durchgeführten Stiften. Somit ist eine explosionsdruckfeste Kabeldurchführung bewirkbar. Hierbei sind die Kabel von der Spule und dem oder den Sensoren der Bremsenanordnung durch die Wandung des zweiten Gehäuseteils hindurch in den Innenraum eines Anschlusskastens führbar, wobei dieser Innenraum hermetisch abgetrennt ist vom die Bremse enthaltenden Innenraum der Bremsanordnung. Insbesondere ist eine Handlüftung der Bremse ebenfalls von außen durch das zweite Gehäuseteil hindurch mittels eines Drehteils ermöglicht. Somit ist ein sicherer Betrieb auch in explosionsgefährdeter Umgebung ermöglicht.

Unter "explosionsdruckfest" wird hier verstanden, dass die Kabeldurchführung einem Überdruck, insbesondere bei einer Explosion, von zumindest 3 bar standhält. Der Höchstdruck für die Kabeldurchführung beträgt somit vorzugsweise 3 bar.

**Erfindungsgemäß** weist das Dichtelement durchgehende Ausnehmungen auf, durch welche jeweils entweder ein Kabel durchgeführt ist oder ein Stift hindurchragt, wobei die Ausnehmungen jeweils parallel zur Bohrungsachse der zylindrischen Bohrung ausgerichtet sind, wobei eine der Ausnehmungen einen größeren lichten Innendurchmesser aufweist als eine andere der Ausnehmungen. Von Vorteil ist dabei, dass keine der Ausnehmungen unbefüllt ist. Somit ist eine hohe Dichtheit erreicht.

Bei einer vorteilhaften Ausgestaltung weist jede der Ausnehmungen jeweils zumindest eine Verengung auf, welche durch das jeweilige Kabel oder durch den jeweiligen Stift verformt ist. Von Vorteil ist dabei, dass eine verbesserte Dichtigkeit erreichbar ist, da der Stift kraftschlüssig verbunden wird.

Bei einer vorteilhaften Ausgestaltung ist das Dichtelement tonnenförmig ausgeformt und/oder weist zumindest einen konvexen, insbesondere tonnenförmigen, Oberflächenbereich auf. Von Vorteil ist dabei, dass eine elastische Verformung schon beim Einführen in die Ausnehmung erreichbar ist. Somit wird schon beim Einführen Dichtigkeit hergestellt.

Bei einer vorteilhaften Ausgestaltung ist das Dichtelement gegen eine Stufe der Stufenbohrung angestellt. Von Vorteil ist dabei, dass der Durchmesser des Dichtelements größer ist als der lichte Innendurchmesser an der Stufe der Stufenbohrung. Somit drückt die Schraubbuchse das Dichtelement gegen die Stufe und verformt diese dabei derart, dass eine hohe Dichtigkeit zum ersten Gehäuse hin erreicht ist, also die Kabel und Stifte gegen das erste Gehäuseteil abgedichtet sind.

Bei einer vorteilhaften Ausgestaltung weist der Antrieb ein Getriebe mit einem Getriebegehäuse, eine elektromagnetisch betätigbare Bremsanordnung und einen Elektromotor, auf, wobei die Bremsanordnung zwischen dem Getriebe und dem Elektromotor angeordnet ist,
wobei in einem ersten Gehäuseteil der Bremsanordnung ein erstes Lager und in einem zweiten Gehäuseteil der Bremsanordnung ein zweites Lager aufgenommen ist,
wobei eine Welle mittels des ersten und zweiten Lagers drehbar gelagert ist,
wobei die Welle mit einem Verzahnungsteil des Getriebes, insbesondere mit einem Verzahnungsteil, insbesondere Aufsteckritzel, der ersten Getriebestufe des Getriebes, drehfest verbunden ist oder einstückig, insbesondere also einteilig, mit diesem Verzahnungsteil ausgeführt ist,
wobei die Welle durch einen Magnetkörper, insbesondere durch einen ferromagnetischen Spulenkörper, der Bremsanordnung hindurchragt,
wobei die Welle drehfest mit einem Bremsbelagträger verbunden ist, der in axialer Richtung zwischen dem ersten und dem zweiten Lager angeordnet ist,
wobei ein Drehteil relativ zum ersten Gehäuseteil drehbar gelagert ist, insbesondere um eine Drehachse, die senkrecht zur Drehachse der Welle ausgerichtet ist,
wobei eine Schraubbuchse mit ihrem Außengewinde in eine durch das erste Gehäuseteil durchgehende Gewindebohrung eingeschraubt ist und ein Drehteil in der Schraubbuchse aufgenommen und drehbar gelagert ist, wobei das Drehteil beidseitig aus der Schraubbuchse hervorragt,
wobei das Drehteil einen exzentrischen Bereich aufweist, welcher mit einer Ankerscheibe der Bremsanordnung in Wirkverbindung ist, insbesondere zum manuell betätigten Lüften der Bremsanordnung,
insbesondere wobei der Bremsbelagträger zur Welle relativ verschiebbar angeordnet ist, insbesondere parallel zur Drehachse der Welle.

Von Vorteil ist dabei, dass das Drehteil in der Schraubbuchse derart aufgenommen ist, dass ein zylindrischer Bereich in einer innenzylindrischen Ausnehmung der Schraubbuchse aufgenommen ist und derart anliegt, dass die Bremsanordnung explosionsdruckfest ist, insbesondere und eine Explosionsfront nicht zwischen Schraubbuchse und Drehteil sich ausbreiten kann. Somit ist ein manuell betätigtes Drehen des Drehteils ermöglicht, indem der Bügel geschwenkt wird und dadurch das Drehteil in der Schraubbuchse gedreht wird, so dass der unrunde Abschnitt, insbesondere Bereich, des Drehteils die Ankerscheibe der Bremsanordnung entgegen der von Federelementen der Bremsanordnung erzeugten, auf die Ankerscheibe der Bremsanordnung wirkenden Federkraft lüftet, also vom Bremsbelagträger wegdrückt.

Bei einer vorteilhaften Ausgestaltung ist die Schraubbuchse aus einem weicheren Material als das Drehteil gefertigt,
insbesondere wobei das Drehteil aus einem gehärteten Stahl gefertigt ist und das Schraubteil aus eine Kupfer aufweisenden Material, insbesondere aus einer Kupferlegierung und/oder aus
Messing. Von Vorteil ist dabei, dass das Drehteil gleitgelagert ist und somit mit geringster Lagerluft gelagert ist. Außerdem ist Kupfer sehr gut wärmeleitend, so dass eine Explosionsfront, die versucht, zwischen Schraubbuchse und Drehteil sich auszubreiten, sehr schnell Wärme verliert und die Ausbreitung somit noch schneller verhinderbar ist als bei Verwendung von weniger wärmeleitfähigen Materialien.

Bei einer vorteilhaften Ausgestaltung weist das Drehteil einen Kragenbereich, insbesondere einen bezogen auf die Drehachse des Drehteils in Umfangsrichtung ununterbrochen umlaufend ausgebildeten Kragenbereichs, auf,
wobei der Kragenbereich am Schraubteil ansteht,
insbesondere wobei der Kragenbereich in bezogen auf die Drehachse des Drehteils radialer Richtung am Drehteil hervorsteht und/oder wobei der Kragenbereich axial zwischen dem unrunden Bereich und dem runden, insbesondere zylindrischen, Abschnitt, insbesondere Bereich, des Drehteils angeordnet ist. Von Vorteil ist dabei, dass eine axiale Begrenzung und/oder Positionierung in einfacher Weise ermöglicht ist.

Bei einer vorteilhaften Ausgestaltung weist das Drehteil einen unrunden Dombereich auf, welcher in eine Ausnehmung eines Bügels hineinragt, insbesondere zur drehfesten Verbindung des Bügels mit dem Drehteil. Von Vorteil ist dabei, dass eine drehfeste Verbindung zwischen Bügel und Drehteil in einfacher Weise erreichbar ist.

Bei einer vorteilhaften Ausgestaltung ist eine am ersten Gehäuseteil abgestützte Rückstellfeder mit dem Bügel verbunden,
insbesondere wobei die Rückstellfeder eine Spiralfeder aufweist und/oder aus einem Draht hergestellt ist, dessen erstes Ende umgebogen und/oder in eine Ausnehmung des Bügels eingesteckt ist und dessen zweites Ende in ein Gehäuseteil. Von Vorteil ist dabei, dass eine Rückstellung des Bügels in einfacher Weise ermöglicht ist und somit das manuell eingeleitete Lüften automatisch beendet wird, wenn die manuelle Betätigung beendet ist.

Bei einer vorteilhaften Ausgestaltung weist der Antrieb ein Getriebe mit einem Getriebegehäuse, eine elektromagnetisch betätigbare Bremsanordnung und einen Elektromotor auf, wobei die Bremsanordnung zwischen dem Getriebe und dem Elektromotor angeordnet ist,
wobei in einem ersten Gehäuseteil der Bremsanordnung ein erstes Lager und in einem zweiten Gehäuseteil der Bremsanordnung ein zweites Lager aufgenommen ist,
wobei eine Welle mittels des ersten und zweiten Lagers drehbar gelagert ist,
wobei die Welle mit einem Verzahnungsteil des Getriebes, insbesondere mit einem Verzahnungsteil, insbesondere Aufsteckritzel, der ersten Getriebestufe des Getriebes, drehfest verbunden ist oder einstückig, insbesondere also einteilig, mit diesem Verzahnungsteil ausgeführt ist,
wobei die Welle durch einen Magnetkörper, insbesondere durch einen ferromagnetischen Spulenkörper, der Bremsanordnung hindurchragt,
wobei die Welle drehfest mit einem Bremsbelagträger verbunden ist, der in axialer Richtung zwischen dem ersten und dem zweiten Lager angeordnet ist,
insbesondere wobei der Bremsbelagträger zur Welle relativ verschiebbar angeordnet ist, insbesondere parallel zur Drehachse der Welle.

Von Vorteil ist dabei, dass die Betriebskosten gering sind, weil eine Wartung auch von nicht speziell qualifiziertem Personal durchführbar ist. Insbesondere ist die Bremsanordnung explosionsdruckfest gekapselt und darf daher nur von speziell qualifiziertem Personal geöffnet werden. Jedoch ist die gesamte Bremsanordnung aus dem Antrieb von nicht derart speziell qualifiziertem Personal ausbaubar und austauschbar gegen eine andere Bremsanordnung.

Somit ist eine kostengünstige Wartung ausführbar. Darüber hinaus ist dieses Personal auch berechtigt, den Elektromotor und das Getriebe zu warten, insbesondere also auch das Getriebe zu öffnen und Öl nachzufüllen oder ein Verzahnungsteil des Getriebes auszutauschen.

Darüber hinaus ist die Bremsanordnung selbst mit einem Verschleißsensor ausstattbar, so dass rechtzeitig eine Wartung oder ein Austausch veranlassbar ist. Außerdem ist ein Winkelsensor in die Bremsanordnung integrierbar, wodurch die Betriebssicherheit erhöht und dadurch auch die Betriebskosten insbesondere durch rechtzeitige Wartung und Verhinderung von Schäden erniedrigt sind.

Wichtig ist auch, dass der Bremsbelagträger verschiebbar angeordnet ist und somit die Bremswirkung im Wesentlichen unabhängig vom Verschleißzustand der Bremsbeläge des Bremsbelagträgers sind. Denn ein geringfügiger Verschleiß ist mittels Verschiebung ausgleichbar. Auch dadurch ist die Betriebssicherheit erhöht.

Bei einer vorteilhaften Ausgestaltung ist das erste Gehäuseteil mit dem zweiten Gehäuseteil verbunden,
insbesondere wobei der Bereich der Berührung des ersten Gehäuseteils mit dem zweiten Gehäuseteil in axialer Richtung weiter ausgedehnt ist als in radialer Richtung. Von Vorteil ist dabei, dass die Bremse in einem explosionsdruckfesten Gehäuse vorsehbar ist. Somit ist die Bremse gekapselt angeordnet und als transportable Einheit zwischen dem Motor und dem Getriebe anordenbar.

Bei einer vorteilhaften Ausgestaltung ist die Welle mit der Rotorwelle des Elektromotors drehfest verbunden. Von Vorteil ist dabei, dass die Welle über eine Kupplung, insbesondere Klauenkupplung, mit der Rotorwelle verbindbar ist. Somit ist eine Kupplungsfunktion in die Bremsanordnung integrierbar. Die Bremsanordnung fungiert also auch als Adapter zwischen Motor und Getriebe, wobei sie beispielsweise Abweichungen der Drehachse der Rotorwelle von der Drehachse der Welle ausgleicht und/oder kompensiert.

Bei einer vorteilhaften Ausgestaltung weist die Welle an ihrem der Rotorwelle zugewandten axialen Endbereich in Umfangsrichtung voneinander beabstandete Klauen auf,
wobei ein Kupplungsteil drehfest mit der Rotorwelle verbunden ist, insbesondere mittels Passfederverbindung,
wobei das Kupplungsteil an seinem der Welle zugewandten axialen Endbereich in Umfangsrichtung voneinander beabstandete Klauen aufweist,
wobei der von den Klauen des Kupplungsteils in axialer Richtung überdeckte Bereich mit dem von den Klauen der Welle in axialer Richtung überdeckten Bereich überlappt,
insbesondere wobei die Klauen des Kupplungsteils einen auf die Drehachse der Welle bezogenen Radialabstandsbereich überdecken, welcher auch von den Klauen der Welle überdeckt wird. Von Vorteil ist dabei, dass mittels der Kupplung, insbesondere mittels des Kupplungsteils, ein Toleranzausgleich bewirkbar ist. Wenn also die Drehachse der Rotorwelle und Welle nicht exakt miteinander fluchten, bewirkt die Kupplung, insbesondere das Kupplungsteil, eine Übertragung des Drehmoments und dämpft Quermomente ab. Außerdem ist zwischen den Klauen Kunststoffmaterial, insbesondere eines sternförmigen Kunststoffsterns vorsehbar, so dass Drehzahlschwankungen abgedämpft werden.

Bei einer vorteilhaften Ausgestaltung ist der Bremsbelagträger relativ zur Welle axial bewegbar angeordnet, insbesondere wobei auf die Welle ein Mitnehmer aufgesteckt ist, der in Umfangsrichtung formschlüssig mit der Welle verbunden ist und/oder der mittels einer Passfederverbindung formschlüssig mit der Welle verbunden ist,
wobei der Mitnehmer eine Außenverzahnung aufweist, welche mit der Innenverzahnung des Bremsbelagträgers im Eingriff ist. Von Vorteil ist dabei, dass der Bremsbelagträger durch die Bewegung den Verschleiß von Bremsbelägen zunächst ausgleicht. Denn bei dünneren Bremsbelägen und stromloser Spule drücken die Federelemente über die Ankerscheibe den Bremsbelagträger entsprechend näher an die Reibscheibe. Somit ist die Betriebssicherheit hoch. Außerdem wird der Verschleiß mit einem an der Brems angeordneten Sensor, insbesondere Mikroschalter oder induktiver Näherungssensor, überwacht auf Überschreiten eines zulässigen Maßes. Auch auf diese Weise ist die Betriebssicherheit weiter erhöht.

Bei einer vorteilhaften Ausgestaltung ist eine Ankerscheibe mit dem Magnetkörper drehfest verbunden und axial bewegbar verbunden,
wobei am Magnetkörper abgestützte Federelemente auf die Ankerscheibe drücken, insbesondere die Ankerscheibe mit Federkraft beaufschlagen,
wobei die Ankerscheibe zwischen, insbesondere axial zwischen, dem Magnetkörper und dem Bremsbelagträger angeordnet ist,
insbesondere wobei der Magnetkörper und/oder die Ankerscheibe aus ferromagnetischem Material gefertigt ist. Von Vorteil ist dabei, dass die Betriebssicherheit erhöht ist, da bei stromloser Spule die Bremse automatisch einfällt.

Bei einer vorteilhaften Ausgestaltung ist eine Reibscheibe mit dem Magnetkörper verbunden, insbesondere mittels Bolzen, welche in den Magnetkörper hineinragen und die Ankerscheibe führen,
insbesondere wobei die Reibscheibe mit dem ersten Gehäuseteil verbunden ist. Von Vorteil ist dabei, dass die Bremse vorkomplettiert ausbildbar ist und somit die Sicherheit erhöht ist.

Bei einer vorteilhaften Ausgestaltung ist die Bremse, umfassend den Magnetkörper, die Spule, die Federelemente, die Ankerscheibe, den Bremsbelagträger, die Reibscheibe und Bolzen vorkomplettiert ausgebildet. Von Vorteil ist dabei, dass die Bremse vor dem Einbau in das Gehäuse der Bremsanordnung schon montierbar ist und als funktionsfähige Einheit in einem Lager lagerbar und danach in dem Gehäuse einbaubar ist. Beim Einbauen wird die Reibscheibe mit dem ersten Gehäuseteil des Gehäuses der Bremsanordnung mittels Schrauben verbunden. Vorzugswiese wird dabei eine Leiterplatte zwischen der Reibscheibe und dem ersten Gehäuseteil eingeklemmt.

Bei einer vorteilhaften Ausgestaltung sind der Magnetkörper, die Spule, die Federelemente, die Ankerscheibe, der Bremsbelagträger, die Reibscheibe und Bolzen vom aus dem ersten und zweiten Gehäuseteil gebildeten Gehäuse umgeben und/oder eingehaust. Von Vorteil ist dabei, dass die Bremse vor dem Einbau in das Gehäuse der Bremsanordnung schon montierbar ist und als funktionsfähige Einheit in einem Lager lagerbar und danach in dem Gehäuse einbaubar ist. Beim Einbauen wird die Reibscheibe mit dem ersten Gehäuseteil des Gehäuses der Bremsanordnung mittels Schrauben verbunden. Vorzugswiese wird dabei eine Leiterplatte zwischen der Reibscheibe und dem ersten Gehäuseteil eingeklemmt.

Bei einer vorteilhaften Ausgestaltung ist ein Drehteil relativ zum ersten Gehäuseteil drehbar gelagert, insbesondere um eine Drehachse, die senkrecht zur Drehachse der Welle ausgerichtet ist,
wobei das Drehteil einen exzentrischen Bereich aufweist,
wobei in einer ersten Drehstellung des Drehteils der exzentrische Bereich die Ankerscheibe entgegen der von den Federelementen erzeugten Federkraft zum Magnetkörper hin drückt und in einer zweiten Drehstellung des Drehteils die Ankerscheibe derart in axialer Richtung, also in Richtung der Drehachse der Welle, bewegbar ist, dass die Ankerscheibe den Bremsbelagträger auf die Reibscheibe drückt, insbesondere bei unbestromter Spule,
insbesondere wobei das Drehteil mit einem Haltebügel verbunden ist, insbesondere wobei der Haltebügel sich zumindest abschnittsweise, insbesondere bezogen auf die Drehachse der Welle, tangential und/oder in Umfangsrichtung erstreckt. Von Vorteil ist dabei, dass eine Handlüftung, also per Hand aktivierbare Lüftung der Bremse erreichbar ist. Hierzu wird ein Haltebügel geschwenkt und dadurch das Drehteil derart gedreht, dass der exzentrische Teil des Drehteils die Ankerscheibe zum Magnetkörper hindrückt, insbesondere entgegen der von den Federelementen erzeugten Federkraft.

Bei einer vorteilhaften Ausgestaltung ist mit dem zweiten Gehäuseteil ein Flanschteil verbunden, welches eine Öffnung des Getriebegehäuses abdeckt und/oder insbesondere öldicht verschließt. Von Vorteil ist dabei, dass die Bremsanordnung mit ihrem gesamten Gehäuse über das Flanschteil mit dem Getriebe verbindbar ist und vom Getriebe haltbar ist. Insbesondere ist der Motor an dem Gehäuse der Bremsanordnung befestigbar und über dieses Gehäuse haltbar. Außerdem ist somit auch nicht speziell qualifiziertes Personal einsetzbar, um die Bremsanordnung mit dem Getriebe zu verbinden und dann das Öl in das Getriebe einzufüllen. Dabei muss die im Gehäuse der Bremsanordnung eingekapselte Bremse nicht geöffnet werden. Mit dem Flanschteil ist die Öffnung des Getriebes abdeckbar und somit das Getriebe mit Öl danach befüllbar. In Weiterbildung ist sogar das zweite Gehäuseteil der Bremsanordnung direkt zum Abdecken der Öffnung des Getriebes verwendbar. Ein Flanschteil ist dann nicht notwendig.

Bei einer vorteilhaften Ausgestaltung ist an der Außenseite des ersten Gehäuseteils ein Unterteil verbunden, auf welches ein Deckel aufgesetzt ist, so dass in dem so aus dem Unterteil und dem Deckel gebildeten Anschlusskasten elektrische Anschlussvorrichtungen angeordnet und eingehaust sind,
wobei elektrische Leitungen durch eine explosionsdruckfeste Kabeldurchführung geführt sind, welche in einer durchgehenden Ausnehmung des ersten Gehäuseteils angeordnet ist. Von Vorteil ist dabei, dass der Anschlusskasten selbst explosionsdruckfest ausgeführt ist. Somit sind die elektrischen Anschlüsse an den Anschlussvorrichtungen vorsehbar und daher im explosionsdruckfesten Bereich angeordnet. Außerdem ist dieser Bereich des Anschlusskastens vom Bereich der Bremse getrennt und nur über eine Kabeldurchführung verbunden. Somit kann sich eine Explosion nicht vom Bereich der Bremse zum Bereich der Anschlussvorrichtungen ausbreiten und umgekehrt ebenso nicht. Daher ist die Sicherheit erhöht.

Bei einer vorteilhaften Ausgestaltung ist eine erste Leiterplatte drehfest mit dem ersten Gehäuseteil verbunden,
wobei eine zweite, insbesondere also weitere, Leiterplatte drehfest mit der Welle verbunden ist,
wobei die erste Leiterplatte derart mit elektronischen Bauelementen bestückt ist, dass die Winkellage der zweiten Leiterplatte und/oder der Welle detektierbar ist,
insbesondere wobei die erste Leiterplatte parallel zur zweiten Leiterplatte angeordnet ist und/oder wobei die erste Leiterplatte von der Reibscheibe an das erste Gehäuseteil angedrückt wird, insbesondere wobei die zweite Leiterplatte axial zwischen der ersten Leiterplatte und dem ersten Gehäuseteil angeordnet ist. Von Vorteil ist dabei, dass die erste Leiterplatte eingeklemmt anordenbar ist und somit kostengünstig verbindbar.

Bei einer vorteilhaften Ausgestaltung ist ein Sensor zur Detektion des Bremsbelagverschleißes im aus dem ersten und zweiten Gehäuseteil gebildeten Gehäuse angeordnet,
insbesondere wobei die Sensorleitungen durch die Kabeldurchführung durchgeführt sind. Von Vorteil ist dabei, dass rechtzeitig eine Wartung ausführbar ist.

Bei einer vorteilhaften Ausgestaltung ist zwischen dem ersten Gehäuseteil und der Welle ein Ringspalt angeordnet,
insbesondere dessen axiale Länge größer als der Radius des Ringspalts ist,
wobei der Ringspalt auf der vom Magnetkörper und/oder vom zweiten Lager abgewandten Seite des ersten Lagers angeordnet ist, insbesondere auf der vom Magnetkörper und/oder vom zweiten Lager in axialer Richtung abgewandten Seite des ersten Lagers angeordnet ist. Von Vorteil ist dabei, dass der Ringspalt derart eng und derart axial lang ausgeführt ist, dass ein Durchdringen einer Explosionsfront verhindert ist. Außerdem ist das erste Lager im explosionsdruckfesten Bereich anordenbar und somit die Betriebssicherheit erhöht, weil die Drehbarkeit der Welle sicher gewährleistet ist.

Bei einer vorteilhaften Ausgestaltung ist das zweite Lager als Doppellager ausgeführt, insbesondere wobei das zweite Lager zumindest ein Zylinderrollenlager aufweist. Von Vorteil ist dabei, dass Querkräfte, welche beispielsweise in der ersten Getriebestufe entstehen, über das Doppellager ableitbar sind und somit der zwischen der Welle und dem zweiten Gehäuseteil angeordnete Ringspalt seine Dicke auch bei schwankender Querkraft nicht ändert, insbesondere nicht messbar ändert.

Bei einer vorteilhaften Ausgestaltung ist zwischen dem zweiten Gehäuseteil und der Welle ein weiterer Ringspalt angeordnet,
insbesondere dessen axiale Länge größer als der Radius des weiteren Ringspalts ist,
wobei das zweite Lager auf der vom Magnetkörper und/oder vom ersten Lager abgewandten Seite des weiteren Ringspalts angeordnet ist, insbesondere auf der vom Magnetkörper und/oder vom ersten Lager in axialer Richtung abgewandten Seite des weiteren Ringspalts angeordnet ist. Von Vorteil ist dabei, dass das zweite Lager von außen zugänglich und austauschbar ist, ohne dass das Gehäuse der Bremsanordnung geöffnet werden muss, austauschbar ist. Somit muss wieder keine spezielle Eignung einer Fachkraft verfügbar sein. Der weitere Ringspalt verändert seine Dicke auch bei schwankender Querkraft nicht insbesondere nicht messbar.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

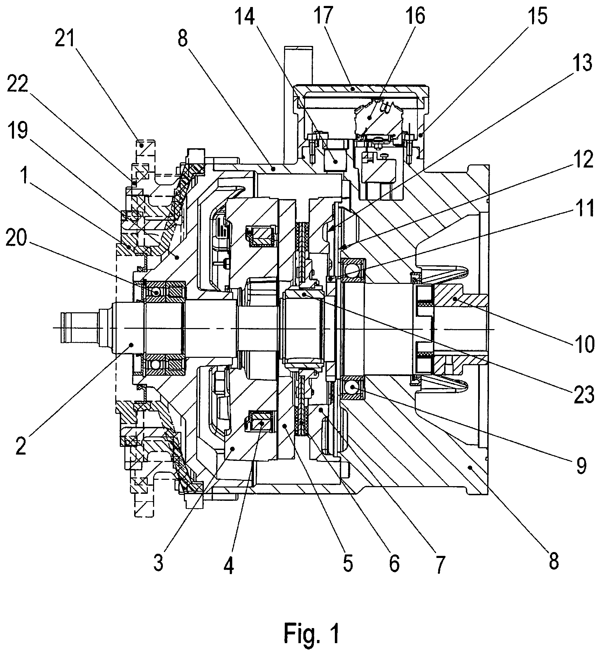

In der Figur 1 ist ein Querschnitt durch eine erfindungsgemäße Bremsanordnung dargestellt.
In der Figur 2 ist eine Schrägansicht einer angeschnittenen Darstellung der Bremsanordnung gezeigt.
In der Figur 3 ist ein Querschnitt einer weiteren Bremsanordnung dargestellt.

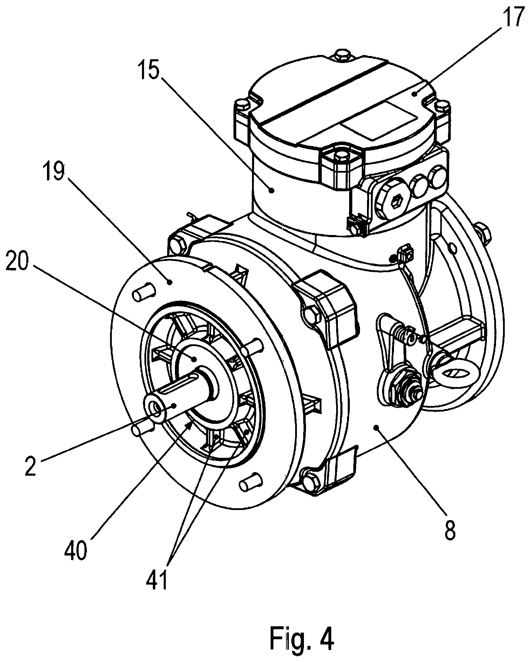

In der Figur 4 ist eine Schrägansicht der Bremsanordnung dargestellt.
In der Figur 5 ist ein Querschnitt eines Bereichs der Bremsanordnung vergrößert dargestellt, welcher ein Drehteil 22 zeigt.
In der Figur 6 ist das Drehteil 22 in Schrägansicht dargestellt.
In der Figur 7 ist die Kabeldurchführung 14 im Querschnitt näher dargestellt.
In der Figur 8 sind Stifte (74, 80) der Kabeldurchführung 14 in Schrägansicht dargestellt.
In der Figur 9 ist eine Dichtung 70 der Kabeldurchführung 14 in Schrägansicht dargestellt.
In der Figur 10 ist eine Mutter 71 der Kabeldurchführung 14 in Schrägansicht dargestellt.

Wie in den Figuren dargestellt, ist die erfindungsgemäße Bremsanordnung explosionsdruckfest ausgeführt.

Die Bremsanordnung ist zwischen einem Elektromotor und einem Getriebe anordenbar, wobei die Bremsanordnung vom Getriebegehäuse gehalten ist. Die Rotorwelle des Elektromotors ist drehfest mit einem Kupplungsteil 10 verbindbar.

Beispielsweise ist das Kupplungsteil 10 hülsenartig ausgeführt und auf die in den Figuren nicht gezeigte Rotorwelle aufgesteckt und drehfest verbunden, insbesondere mittels Passfederverbindung.

Eine Welle 2 der Bremsanordnung ist drehfest mit einem Verzahnungsteil des Getriebes, insbesondere mit einem Verzahnungsteil der ersten Getriebestufe des Getriebes, verbunden.

Hierzu weist die Welle 2 eine Passfedernut auf, so dass ein Aufsteckritzel auf die Welle 2 aufsteckbar ist und mit der Welle mittels Passfeder drehfest verbindbar ist. Das Aufsteckritzel weise eine Außenverzahnung auf und fungiert als eintreibendes Verzahnungsteil der ersten Getriebestufe des Getriebes.

Die Welle 2 weist an ihrem vom Getriebe und/oder Verzahnungsteil abgewandten axialen Ende Klauen auf, welche als Klauenkupplung in Wirkverbindung mit an dem Kupplungsteil 10 ausgeformten Klauen sind. Hierzu sind die Klauen der Welle 2 in Umfangsrichtung voneinander beabstandet, insbesondere regelmäßig, und ragen in diejenigen Zwischenräume hinein, welche durch die in Umfangsrichtung ausgeführte Beabstandung der Klauen des Kupplungsteils 10 erzeugt sind. Auf diese Weise ist die Welle 2 in Umfangsrichtung formschlüssig mit dem Kupplungsteil 10 verbunden.

Die Welle 2 ist mittels eines in einem ersten Gehäuseteil 8 aufgenommenen ersten Lagers 9 und mittels eines in einem zweiten Gehäuseteil 19 aufgenommenen Lagers 20 drehbar gelagert.

Ein Flanschteil 1 ist mit dem zweiten Gehäuseteil 19 verbunden und dient zur Verbindung mit dem Getriebe. Hierzu wird das Flanschteil 1 mittels Schrauben mit dem Getriebegehäuse verbunden.

Beim Verbinden des Flanschteils 1 mit dem Getriebegehäuse wird eine Öffnung des Getriebegehäuses insbesondere öldicht verschlossen. Das Flanschteil 1 hält das zweite Gehäuseteil 19, welches mit dem ersten Gehäuseteil 8 verbunden ist, das wiederum mit dem Gehäuse des Elektromotors verbunden ist. Somit ist der Elektromotor über die Bremsanordnung am Getriebe gehalten.

Die druckfeste, explosionsgeschützte Ausführung des Gehäuses der Bremsanordnung bewirkt somit eine hohe Stabilität und Steifigkeit. Daher ist das Gewicht des Elektromotors vom Gehäuse der Bremsanordnung aufnehmbar.

Ein im zweiten Gehäuseteil 19 aufgenommener Wellendichtring dichtet zur Welle 2 hin ab.

Ein hülsenartig ausgeformter Mitnehmer 23 ist auf die Welle 2 aufgesteckt und drehfest verbunden, insbesondere mittels Passfederverbindung. An seinem radial äußeren Umfang weist der Mitnehmer eine Außenverzahnung auf, auf welche ein Bremsbelagträger 6 aufgeschoben ist, wobei eine Innenverzahnung des Bremsbelagträgers 6 mit der Außenverzahnung im Eingriff ist, Insbesondere ist somit der Bremsbelagträger 6 drehfest mit dem Mitnehmer 23 verbunden und axial verschiebbar relativ zum Mitnehmer 23.

Im zweiten Gehäuseteil 19 ist ein Magnetkörper 3 aufgenommen, welcher einen ringförmige Ausnehmung aufweist, in welcher eine Spule, insbesondere Ringwicklung, aufgenommen, insbesondere wobei die Ringachse koaxial zur Drehachse der Welle 2 ausgerichtet ist.

Eine Ankerscheibe 5 ist in axialer Richtung, also in Richtung der Drehachse der Welle 2, zwischen dem Magnetkörper 3 und dem Bremsbelagträger 6 angeordnet.

Die Ankerscheibe 5 besteht vorzugsweise aus ferromagnetischem Material. Die Ankerscheibe 5 ist zwar drehfest mit dem Magnetkörper 3 verbunden, jedoch ist die Ankerscheibe 5 in axialer Richtung, also in Richtung der Drehachse der Welle 2, bewegbar angeordnet. Hierzu sind vorzugsweise Bolzen in axial gerichteten Bohrungen des Magnetkörpers 3 eingesteckt oder eingeschraubt, welche durch entsprechende Ausnehmungen der Ankerscheibe 5 hindurchgeführt sind.

Der Bremsbelagträger 6 weist vorzugsweise axial beidseitig jeweils einen Bremsbelag auf.

Am Magnetkörper 3 abgestützte Federelemente 30 drücken auf die Ankerscheibe 5, so dass die Ankerscheibe 5 mit der von den Federelementen 30 erzeugten Federkraft zum Bremsbelagträger 6 hingedrückt wird, wenn die Spule 4 unbestromt ist. Dabei wird der Bremsbelagträger 6 von der Ankerscheibe 5 zu einer an einer Reibscheibe 7 ausgebildeten Bremsfläche hingedrückt. Die Reibscheibe 7 ist mit dem ersten Gehäuseteil 8 verbunden, insbesondere fest verbunden

Wenn die Spule 4 bestromt ist, wird jedoch die Ankerscheibe 5 entgegen der von den Federelementen 30 erzeugten Federkraft zum Magnetkörper 3 hingezogen und somit die Bremse gelüftet.

Die Reibscheibe 7 ist vorzugsweise drehscheibenförmig oder im Wesentlichen kreisscheibenförmig ausgebildet, so dass die Verbindung zwischen der Reibscheibe 7 und dem ersten Gehäuseteil 8 ununterbrochen am gesamten Umfang ist. Die Reibscheibe 7 ist vorzugsweise fest verbunden mit dem ersten Gehäuseteil 8.

Dieser Aufbau ermöglicht, die auf die Bremsenfunktion bezogenen Elemente vorkomplettiert auszubilden und dann in das Gehäuse der Bremsanordnung einzubauen.

Zur Vorkomplettierten Ausbildung wird der aus
- dem Magnetkörper 3 samt Federelementen und in ihm aufgenommener Spule 4,
- der Ankerscheibe,
- der die Ankerscheibe führenden Bolzen und
- dem Bremsbelagträger
gebildete Stapel mittels Verbinden der Reibscheibe 7 als vorkomplettierte Bremse ausgebildet. Diese Bremse wird dann in das Gehäuse eingebaut, indem die Reibscheibe 7 mit dem ersten Gehäuseteil 8 verbunden wird. Die Reibscheibe wird vorzugsweise über die Bolzen mit dem Magnetkörper 3 verbunden, wobei die Bolzen in Bohrungen des Magnetkörpers eingesteckt sind. Die Reibscheibe 7 ist beispielsweise mittels Schrauben an die Bolzen angeschraubt. Die Bolzen sind vorzugsweise axial ausgerichtet.

Beim Einbau der Bremse in das Gehäuse der Bremsanordnung wird die Reibscheibe 7 mittels Schrauben mit dem ersten Gehäuseteil 8 verbunden, wobei die Schrauben in Gewindebohrungen des ersten Gehäuseteils 8 eingeschraubt werden.

An der vom Bremsbelagträger 6 abgewandten Seite weist die Reibscheibe 7 eine in Umfangsrichtung umlaufende, ringförmige Vertiefung auf, in welcher ein Dauermagnet 13 aufnehmbar ist, der direkt an der Reibscheibe 7 oder auf der Leiterplatte 12 angeordnet ist.

Die Leiterplatte 12 ist von der Reibscheibe 7 auf das erste Gehäuseteil 8 hingedrückt gehalten ist.

Die Dauermagnete sind entweder separat oder auf der Leiterplatte 12 anordenbar.

Eine weitere Leiterplatte ist drehfest mit der Welle 2 verbunden. Somit ist die weitere Leiterplatte relativ drehbar angeordnet zur ersten Leiterplatte 12.

In Wirkverbindung mit den Dauermagneten ist mittels der Leiterplatten ein Sensor realisiert, so dass die Winkellage der Welle 2 vom Sensor detektierbar ist.

Die erste Leiterplatte 12 und/oder die weitere Leiterplatte ist oder sind mit elektronischen Bauelementen bestückt, so dass auf der ersten und/oder weiteren Leiterplatte eine Detektorschaltung angeordnet ist, welche eine Detektion der Winkellage der Welle 2 ermöglicht.

Es sind aber auch andere Wirkprinzipien vorsehbar, die keine Dauermagneten benötigen.

In jedem Fall ist aber die erste Leiterplatte drehfest zum ersten Gehäuseteil 8 angeordnet und die Welle 2 mit der weiteren Leiterplatte drehfest verbunden.

Von der ersten Leiterplatte 12 werden die Sensorsignale mittels eines Kabels durch eine explosionsdruckfeste Kabeldurchführung 14 in einen Anschlusskasten geleitet, der an der Außenseite des ersten Gehäuseteils 8 angeordnet ist. Dieser ist durch Aufsetzen eines ringförmigen Unterteils 15 und eines darauf aufgesetzten Deckels 17 gebildet.

Der Anschlusskasten ist somit selbst wiederum explosionsdruckfest ausgebildet.

Zwischen dem Unterteil 15 und dem auf ihm aufgesetztem Deckel 17 ist im Berührbereich ein möglichst langer und möglichst dünner Spaltbereich ausgebildet, so dass eine eventuelle Explosionswelle beim Durchlaufen des Spaltbereichs derart viel Energie verliert, dass eine Ausbreitung der Explosion durch den Spaltbereich verhindert ist.

Außerdem ist eine Dichtung, insbesondere Flachdichtung oder O-Ring, zwischen dem Deckel 17 und dem Unterteil 15 angeordnet.

Zwischen dem Unterteil 15 und dem ersten Gehäuseteil 8 ist im Berührbereich ein möglichst langer und möglichst dünner Spaltbereich ausgebildet, so dass eine eventuelle Explosionswelle beim Durchlaufen des Spaltbereichs derart viel Energie verliert, dass eine Ausbreitung der Explosion durch den Spaltbereich verhindert ist.

Außerdem ist eine Dichtung, insbesondere Flachdichtung oder O-Ring, zwischen dem Deckel 17 und dem Unterteil 15 angeordnet. Insbesondere ist eine weitere solche Dichtung zwischen dem Unterteil 15 und dem ersten Gehäuseteil 8 angeordnet.

In Umfangsrichtung zwischen den Klauen der Welle 2 und den Klauen des Kuppplungsteils 10 sind strahlenförmige Bereiche eines Kunststoffsterns angeordnet, so dass Drehzahlschwankungen abdämpfbar sind.

Zwischen dem ersten Gehäuseteil 8 und dem mit ihm verbundenen zweiten Gehäuseteil 19 ist im Berührbereich ein möglichst langer und möglichst dünner Spaltbereich ausgebildet, so dass eine eventuelle Explosionswelle beim Durchlaufen des Spaltbereichs derart viel Energie verliert, dass eine Ausbreitung der Explosion durch den Spaltbereich verhindert ist. Der Spaltbereich ist hierzu in axialer Richtung mindestens viermal so weit ausgedehnt als in radialer Richtung, wobei die axiale Richtung parallel zur Richtung der Drehachse der Welle 2 ist.

Außerdem ist eine Dichtung, insbesondere Flachdichtung oder O-Ring, zwischen dem ersten Gehäuseteil 8 und dem mit ihm verbundenen zweiten Gehäuseteil 19 angeordnet.

Das Flanschteil 1 ist außerhalb des aus dem ersten Gehäuseteil 8 und dem mit ihm verbundenen zweiten Gehäuseteil 19 gebildeten Gehäuses der Bremsanordnung angeordnet.

Das zweite Lager 20 ist vorzugsweise als Kugellager ausgeführt, dem noch ein Zylinderrollenlager oder Schräglager zugeordnet ist. Das so gebildete Doppellager der Welle 2 gewährleistet eine möglichst unveränderte Ausrichtung der Welle 2, insbesondere auch dann, wenn vom Aufsteckritzel ein erhebliches Quermoment in die Welle 2 eingeleitet wird. Dies ist besonders wichtig, da zwischen der Welle 2 und dem zweiten Gehäuseteil 19 ein sehr schmaler aber axial langer Ringspalt vorhanden ist, so dass eine Ausbreitung der Explosion durch den Spaltbereich verhindert ist. Hierzu ist der Ringspalt in axialer Richtung vorzugsweise mindestens fünfzig Mal weiter ausgedehnt als in radialer Richtung.

Ebenso ist auch ein solch schmaler Ringspalt zwischen der Welle 2 und dem ersten Gehäuseteil 8 vorhanden, wobei jedoch das erste Lager 9 der Welle 2 im ersten Gehäuseteil 8 aufgenommen ist.

Das erste Lager 9 ist auf der dem Magnetkörper 3 zugewandten Seite des ersten Gehäuseteils 8 angeordnet.

Das Doppellager und somit das zweite Lager 20 ist auf der dem Magnetkörper 3 zugewandten Seite des zweiten Gehäuseteils 19 angeordnet. Auf diese Weise ist nach Einbau der Bremse in das Gehäuse der Bremsanordnung das Gehäuse verbunden und darauf nicht von einer ungenügend qualifizierten Person geöffnet werden. Allerdings darf eine solche Person sehr wohl das Gehäuse mit dem Flanschteil 1 verbinden und das Flanschteil 1 an das Getriebegehäuse verbinden und bei Wartungen zuvor sogar das Doppellager austauschen, insbesondere ohne dass das Gehäuse der Bremsanordnung geöffnet werden muss.

Des Weiteren ist an der Bremsanordnung innerhalb des Gehäuses der Bremsanordnung ein Mikroschalter zur Überwachung des Verschleißes der Bremsbeläge angeordnet. Mit dem Mikroschalter ist ein Abstand zur Ankerscheibe 5 im eingefallenen, also stromlosen Zustand der Spule 4, überwachbar auf Unterschreiten eines Schwellwertes. Somit ist ein Warnsignal vom Mikroschalter erzeugbar, wenn der Bremsbelag einen kritischen Wert an Abrieb überschritten hat. Statt des Mikroschalters ist aber auch ein anderer Abstandssensor einsetzbar.

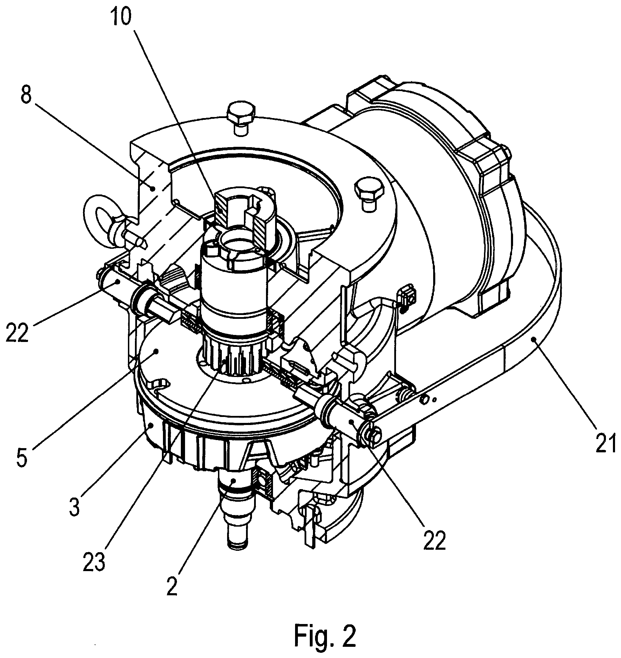

Wie in Figur 2 gezeigt, ist eine Handlüftung der Bremse ermöglicht. Hierzu ist ein Bügel 21 an einem drehbar gelagerten Drehteil 22, das einen unrunden, insbesondere exzentrischen, Abschnitt 60 aufweist, befestigt. Somit ist durch Schwenken des Bügels 21 das Drehteil 22 drehbar, insbesondere um eine Drehachse, welche senkrecht zur Drehachse der Welle 2 ausgerichtet ist. Infolge der Schwenkbewegung wird der exzentrische Bereich 60, insbesondere Abschnitt, auf die Ankerscheibe 5 derart gedrückt, dass die Ankerscheibe 5 zum Magnetkörper 3 hingedrückt wird und dadurch die Bremse gelüftet wird.

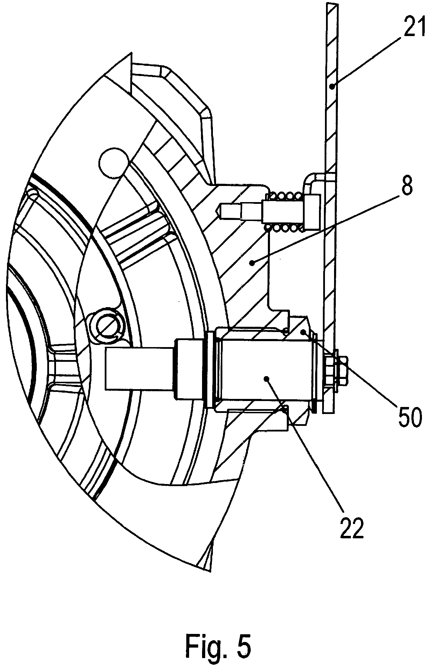

Wie in Figur 5 dargestellt, ist das Drehteil 22 gleitgelagert in einer Schraubbuchse 50. Die Schraubbuchse 50 ist in eine Gewindebohrung des ersten Gehäuseteils 8 eingeschraubt. Die Schraubbuchse 50 ragt durch das erste Gehäuseteil 8 hindurch, insbesondere also von der äußeren Umgebung bis zum Innenraumbereich, welcher die Bremse umfasst.

An ihrem äußeren, also zur Umgebung hin gewandten bezogen auf die Schwenkachse des Drehteils 22 axialen Endbereich weist die Schraubbuchse 50 einen außensechskantartigen Bereich auf. Somit ist die Schraubbuchse 50 mittels eines Werkzeugs einschraubbar in die Gewindebohrung des ersten Gehäuseteils 8.

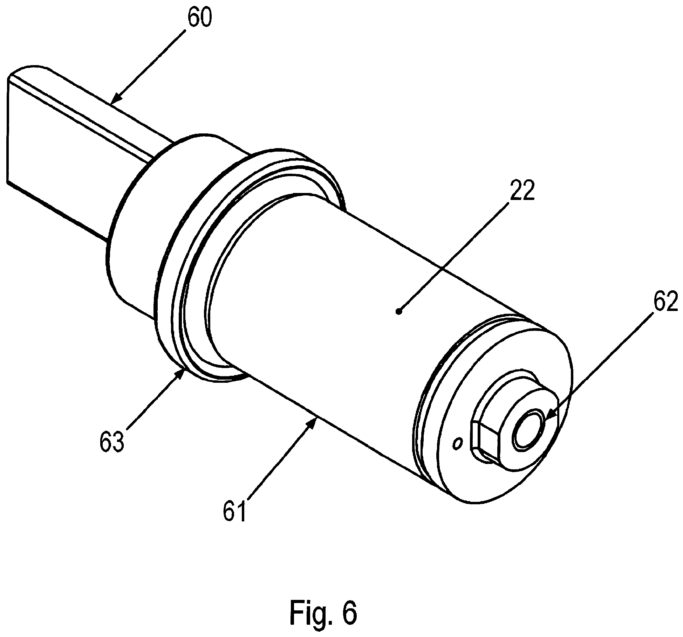

Wie in Figur 6 dargestellt, weist das Drehteil 22 einen umlaufenden Kragenbereich 63 auf, mit welchem das Drehteil an der dem Innenraum zugewandten Stirnseite der Schraubbuchse 50 ansteht.

Das Drehteil 22 ist vorzugswiese aus einem gehärteten Stahl gefertigt. Die Schraubbuchse 50 hingegen ist vorzugsweise aus einem weicheren Material gefertigt, insbesondere Kupfer oder Messing. Dabei ist das Material der Schraubbuchse 50 zumindest elektrisch leitfähig ist. Das erste Gehäuseteil 8 ist ebenfalls aus einem Stahl gefertigt. Somit ist eine Gleitlagerung einfach ausbildbar und die bei einer eventuellen Explosion sich ausbreitende Wärme wird bei Ausbreitung zwischen dem Drehteil 22 und dem Schraubteil, insbesondere Schraubbuchse, 50 abgeleitet, insbesondere größtenteils durch das wärmeleitende Schraubteil, insbesondere Schraubbuchse, 50.

An der zur äußeren Umgebung hin zugewandten Stirnseite weist das Drehteil 22 einen axial hervorragenden unrunden Dombereich 62 auf, auf den der Bügel 21 mit einer durch den Bügel 21 durchgehenden, unrunden Ausnehmung aufgesteckt ist, so dass der Bügel 21 drehfest mit dem Drehteil 22 verbunden ist.

Der runde Abschnitt des Drehteils 22, welcher zwischen dem unrunden Abschnitt 60 und dem Domabschnitt, insbesondere Dombereich, 62 angeordnet ist, ist zylindrisch ausgeführt und in der Schraubbuchse 50 aufgenommen, insbesondere drehbar gleitgelagert.

Somit ist eine drehfeste Verbindung des Bügels 21 mit dem Drehteil 22 vorhanden, das Drehteil 22 ist in der Schraubbuchse 50 aufgenommen und drehbar zu ihr gelagert, wobei ein derart schmaler Spalt zwischen Schraubbuche 50 und Drehteil 22, insbesondere rundem Bereich, insbesondere Abschnitt, 61, vorhanden ist, dass die Anordnung explosionsdruckfest ausgeführt ist.

Eine am ersten Gehäuseteil 8 abgestützte Rückstellfeder ist mit dem Bügel 21verbunden, so dass der Bügel 21 nach Betätigung, insbesondere also nach manuell verursachtem Überwinden der von der Rückstellfeder erzeugten Federkraft, wieder in seine Ausgangslage zurückkehrt. Die Rückstellfeder ist vorzugsweise als Spiralfeder ausgeführt oder weist zumindest eine Spiralfeder auf. Insbesondere ist die Rückstellfeder aus einem gebogenen Draht hergestellt, dessen erstes Ende umgebogen und in eine Ausnehmung des Bügels 21 eingesteckt ist und dessen zweites Ende in eine Ausnehmung des ersten Gehäuseteils 8 eingesteckt ist.

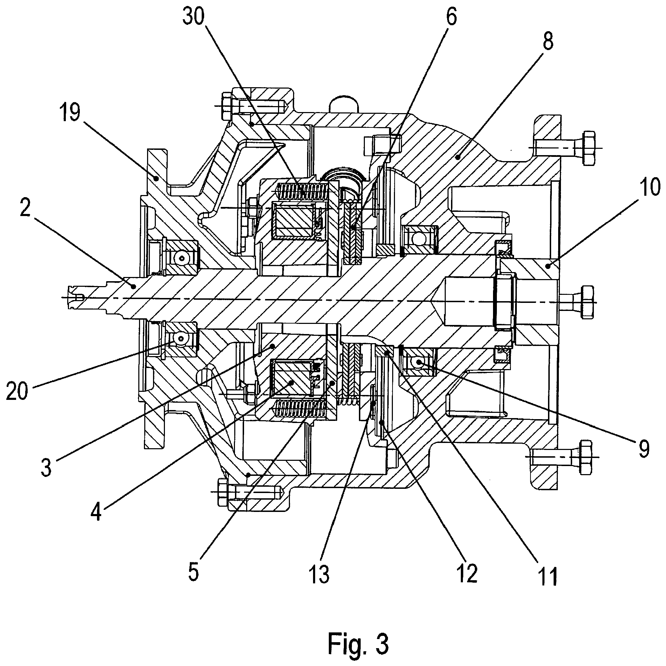

Wie in Figur 3 gezeigt, ist aber auch ohne Flanschteil 1 die Öffnung des Getriebegehäuses durch Verbinden des zweiten Gehäuseteils 19 mit dem Getriebegehäuse die Öffnung abdeckbar und das Getriebe zur äußeren Umgebung hin öldicht verschließbar. Hierzu weist bei Figur 3 das zweite Gehäuseteil 19 einen entsprechend geformten, dem in der Figur 3 nicht gezeigten Getriebe zugewandten Flanschabschnitt auf. Im Unterschied zum Ausführungsbeispiel nach Figur 2 ist das Doppellager auch ersetzbar durch ein entsprechend großes und stabiles Einzellager, wobei dies den Nachteil aufweist, dass die Wandstärke des zweiten Gehäuseteils 19 verringert ausgeführt werden muss.

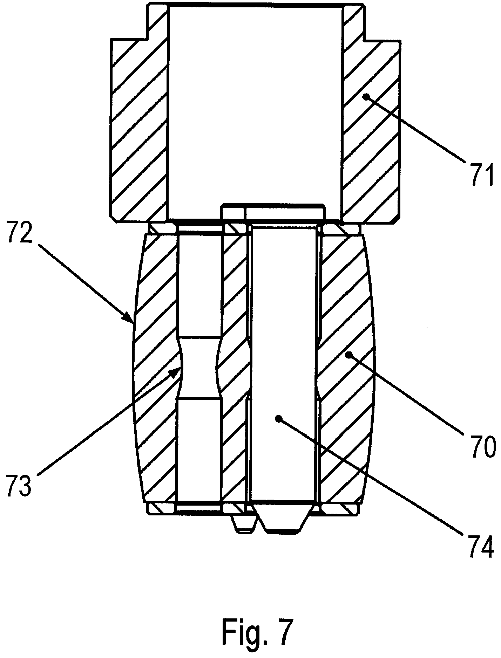

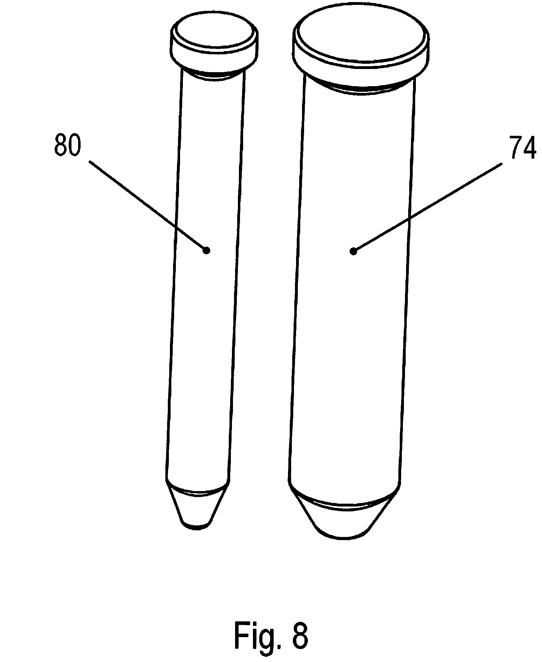

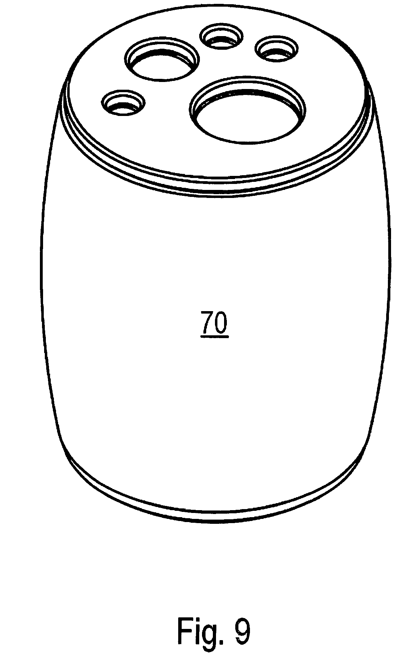

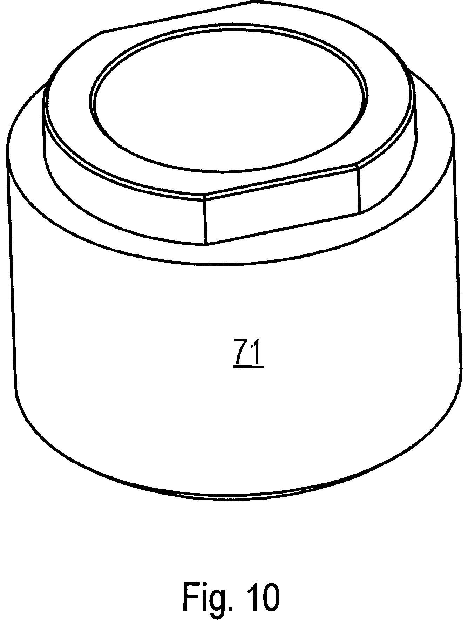

Wie in den Figuren 7 bis 10 dargestellt, weist die Kabeldurchführung 14 ein Dichtelement 70 auf, das durchgehende Ausnehmungen aufweist. Durch diese Ausnehmungen sind jeweilige Kabel zur Versorgung der elektrischen Komponenten der Bremsanordnung durchführbar, so dass die Anschlüsse in dem Anschlusskasten vorsehbar sind. Hierbei sind die Kabel zur Anschlussvorrichtung 16 geführt, welche in dem vom Unterteil 15 und dem darauf aufgesetzten Deckel 17 angeordnet ist. Die Kabeldurchführung ist in der folgenden Weise explosionsdruckfest ausgeführt.

Durch das Dichtelement 70 durchgehende Ausnehmungen, durch welche kein Kabel durchgeführt ist, sind durch einen Stift 74 oder 80 ausgefüllt. Hierzu ist der jeweils vom Durchmesser her passende Stift 74 oder 80 in die jeweilige Ausnehmung eingesteckt.

Jede der Ausnehmungen weist vorzugsweise in ihrer Mitte eine Verengung 73 auf, so dass der Stift 74 oder 80kraftschlüssig eingepresst werden muss und somit eine hohe Dichtigkeit herstellbar ist.

Die dem Stift 74 zugeordnete erste der Ausnehmungen weist einen größeren lichten Innendurchmesser auf als die dem Stift 80 zugeordnete zweite der Ausnehmungen.

Die Ausnehmungen des Dichtelements 70 weisen unterschiedlich große lichte Innendurchmesser auf. Somit sind unterschiedlich dicke Kabel durchführbar.

Die Kabeldurchführung 14 ist in einer Ausnehmung des ersten Gehäuseteils 8 angeordnet.

Hierbei ist das Dichtelement in eine zylindrische Bohrung, insbesondere welche als Stufenbohrung ausgeführt ist, eingesteckt, wobei das Dichtelemente 70 vorzugsweise eine konvexe Form aufweist, insbesondere Tonnenform. Der konvexe, insbesondere tonnenförmige, Oberflächenbereich 72 liegt also an der zylindrischen Bohrung an, so dass er elastisch verformt ist und daher eine hohe Dichtigkeit erreicht wird.

Die Mutter 71 wird mit ihrem Außengewinde in eine Gewindebohrung des ersten Gehäuseteils 8 eingeschraubt, wobei die Gewindebohrung koaxial zur zylindrischen Bohrung ausgerichtet ist.

Die von der Mutter 71 abgewandte Stirnseite des Dichtelements 70 liegt an einer Stufe der zylindrischen Bohrung an. Somit wird das Dichtelement 70 in Richtung der durchgeführten Kabel gequetscht und liegt somit dicht an der Wandung der zylindrischen Bohrung an. Hierzu trägt auch der tonnenförmige äußere Umfang des Dichtelements 70 bei.

Der größte Außendurchmesser des konvexen, insbesondere tonnenförmigen, Oberflächenbereichs 72 ist größer als der lichte Innendurchmesser der zylindrischen Bohrung. Somit wird das Dichtelement 70 schon beim Einstecken in die zylindrische Bohrung elastisch gedehnt wird. Somit ist die Dichtung schon beim Einstecken bewirkt, wird aber beim elastischen Verformen durch Einschrauben der Mutter 71 weiter verbessert.

Da die durch das Dichtelement 70 durchgehenden Ausnehmungen Verengungen 73 aufweisen und die Stifte (74, 80) in die unbelegten, durch das Dichtelement 70 durchgehenden Ausnehmungen eingesteckt sind und somit die Verengungen 73 elastisch verformen, ist eine weiter verbesserte Dichtigkeit erreicht.

Jeder der Stifte weise an seinem ersten Ende eine konische Einführschräge auf und an seinem anderen Ende einen verbreiterten Kopf, mit dem der jeweilige Stift 74 oder 80 am Dichtelement 70 anliegt, insbesondere an der der Schraubbuchse 71 zugewandten Stirnseite des Dichtelements 70.

Bei weiteren erfindungsgemäßen Ausführungsbeispielen wird auch das erste Lager 9 als Doppellager ausgeführt.

### Bezugszeichenliste

1 Flanschteil
2 Welle
3 Magnetkörper
4 Spule
5 Ankerscheibe
6 Bremsbelagträger
7 Reibscheibe
8 erstes Gehäuseteil
9 erstes Lager
10 Kupplungsteil
11 Trägerscheibe
12 erste Leiterplatte
13 Dauermagnet
14 Kabeldurchführung, insbesondere explosionsdruckfest
15 Unterteil
16 Anschlussvorrichtung
17 Deckel
19 zweites Gehäuseteil
20 zweites Lager
21 Bügel
22 Drehteil mit unrundem, insbesondere exzentrischem, Abschnitt
23 Mitnehmer
30 Federelement
40 Lageraufnahme
41 Tragrippen
50 Schraubbuchse
60 unrunder Abschnitt des Drehteils 22
61 runder Abschnitt des Drehteils 22
62 Domabschnitt, insbesondere Dombereich
63 Kragenbereich
70 Dichtelement
71 Mutter
72 konvexer, insbesondere tonnenförmiger, Oberflächenbereich
73 Verengung
74 erster Stift
80 zweiter Stift

## Patentansprüche

1. Antrieb, aufweisend ein Getriebe mit einem Getriebegehäuse, eine elektromagnetisch betätigbare Bremsanordnung und einen Elektromotor,
wobei die Bremsanordnung zwischen dem Getriebe und dem Elektromotor angeordnet ist,
wobei in einem ersten Gehäuseteil (8) der Bremsanordnung ein erstes Lager (9) und in einem zweiten Gehäuseteil (19) der Bremsanordnung ein zweites Lager (20) aufgenommen ist,
wobei eine Welle (2) mittels des ersten und zweiten Lagers (20) drehbar gelagert ist,
wobei die Welle (2) mit einem Verzahnungsteil des Getriebes, insbesondere mit einem Verzahnungsteil, insbesondere Aufsteckritzel, der ersten Getriebestufe des Getriebes, drehfest verbunden ist oder einstückig, insbesondere also einteilig, mit diesem Verzahnungsteil ausgeführt ist,
wobei die Welle (2) durch einen Magnetkörper (3), insbesondere durch einen ferromagnetischen Spulenkörper, der Bremsanordnung hindurchragt,
wobei die Welle (2) drehfest mit einem Bremsbelagträger (6) verbunden ist, der in axialer Richtung zwischen dem ersten und dem zweiten Lager (20) angeordnet ist,
**wobei der Bremsbelagträger (6) zur Welle (2) relativ verschiebbar angeordnet ist, insbesondere parallel zur Drehachse der Welle (2),**
**dadurch gekennzeichnet, dass**
im ersten Gehäuseteil (8) eine Kabeldurchführung (14) angeordnet ist, welche eine Schraubmutter und ein Dichtelement (70) aufweist, wobei das Dichtelement (70) in eine Stufenbohrung eingesteckt ist und die Schraubmutter in eine Gewindebohrung des ersten Gehäuseteils (8) eingeschraubt ist,
wobei die Gewindebohrung koaxial zur Stufenbohrung ausgerichtet ist,
wobei die Schraubmutter am Dichtelement (70) ansteht,
insbesondere wobei das Dichtelement (70) aus Gummi oder aus Kunststoff gefertigt ist,
wobei das Dichtelement (70) durchgehende Ausnehmungen aufweist, durch welche jeweils entweder ein Kabel durchgeführt ist oder ein Stift (74) hindurchragt,
wobei die Ausnehmungen jeweils parallel zur Bohrungsachse der zylindrischen Bohrung ausgerichtet sind,
wobei eine der Ausnehmungen einen größeren lichten Innendurchmesser aufweist als eine andere der Ausnehmungen.

2. Antrieb nach Anspruch 1,
**dadurch gekennzeichnet, dass**
jede der Ausnehmungen jeweils zumindest eine Verengung (73) aufweist, welche durch das jeweilige Kabel oder durch den jeweiligen Stift (74) verformt ist.

3. **Antrieb nach Anspruch 1 oder 2,**
**dadurch gekennzeichnet, dass**
das Dichtelement (70) tonnenförmig ausgeformt ist und/oder zumindest einen konvexen, insbesondere tonnenförmigen, Oberflächenbereich (72) aufweist.

4. **Antrieb nach einem der vorangegangenen Ansprüche,**
**dadurch gekennzeichnet, dass**
das Dichtelement (70) gegen eine Stufe der Stufenbohrung angestellt ist.

5. Antrieb nach einem der vorangegangenen Ansprüche,
**dadurch gekennzeichnet, dass**
an der Außenseite des ersten Gehäuseteils (8) ein Unterteil (15) verbunden ist, auf welches ein Deckel (17) aufgesetzt ist, so dass in dem so aus dem Unterteil (15) und dem Deckel (17) gebildeten Anschlusskasten elektrische Anschlussvorrichtungen (16) angeordnet und eingehaust sind,
wobei elektrische Leitungen durch die explosionsdruckfeste Kabeldurchführung (14) geführt sind, welche in einer durchgehenden Ausnehmung des ersten Gehäuseteils (8) angeordnet ist,
insbesondere wobei der Höchstdruck der explosionsdruckfesten Kabeldurchführung (14) 3 bar oder mehr beträgt.

6. **Antrieb nach einem der vorangegangenen Ansprüche,**
**dadurch gekennzeichnet, dass**
ein Drehteil relativ zum ersten Gehäuseteil (8) drehbar gelagert ist, insbesondere um eine Drehachse, die senkrecht zur Drehachse der Welle (2) ausgerichtet ist,
wobei eine Schraubbuchse (50) mit ihrem Außengewinde in eine durch das erste Gehäuseteil (8) durchgehende Gewindebohrung eingeschraubt ist und das Drehteil in der Schraubbuchse (50) aufgenommen und drehbar gelagert ist, wobei das Drehteil beidseitig aus der Schraubbuchse (50) hervorragt,
wobei das Drehteil einen exzentrischen Bereich aufweist, welcher mit einer Ankerscheibe (5) der Bremsanordnung in Wirkverbindung ist, insbesondere zum manuell betätigten Lüften der Bremsanordnung.

7. **Antrieb nach einem der vorangegangenen Ansprüche,**
**dadurch gekennzeichnet, dass**
die Schraubbuchse (50) aus einem weicheren Material als das Drehteil gefertigt ist,
insbesondere wobei das Drehteil aus einem gehärteten Stahl gefertigt ist und das Schraubteil, insbesondere die Schraubbuchse (50), aus eine Kupfer aufweisenden Material, insbesondere aus einer Kupferlegierung und/oder aus Messing.

8. **Antrieb nach einem der vorangegangenen Ansprüche,**
**dadurch gekennzeichnet, dass**
das Drehteil einen Kragenbereich (63), insbesondere einen bezogen auf die Drehachse des Drehteils in Umfangsrichtung ununterbrochen umlaufend ausgebildeten Kragenbereichs (63), aufweist,
wobei der Kragenbereich (63) am Schraubteil ansteht,
insbesondere wobei der Kragenbereich (63) in bezogen auf die Drehachse des Drehteils radialer Richtung am Drehteil hervorsteht und/oder wobei der Kragenbereich (63) axial zwischen dem unrunden Bereich, insbesondere Abschnitt, und dem runden, insbesondere zylindrischen, Bereich, insbesondere Abschnitt, des Drehteils angeordnet ist.

9. Antrieb nach einem der vorangegangenen Ansprüche,
**dadurch gekennzeichnet, dass**
das Drehteil einen unrunden Dombereich aufweist, welcher in eine Ausnehmung eines Bügels (21) hineinragt, insbesondere zur drehfesten Verbindung des Bügels (21) mit dem Drehteil,
und/oder dass
eine am ersten Gehäuseteil (8) abgestützte Rückstellfeder mit dem Bügel (21) verbunden ist,
insbesondere wobei die Rückstellfeder eine Spiralfeder aufweist und/oder aus einem Draht hergestellt ist, dessen erstes Ende umgebogen und/oder in eine Ausnehmung des Bügels (21) eingesteckt ist und dessen zweites Ende in ein erstes Gehäuseteil (8).

10. Antrieb nach einem der vorangegangenen Ansprüche,
**dadurch gekennzeichnet, dass**
das erste Gehäuseteil (8) mit dem zweiten Gehäuseteil (19) verbunden ist,
insbesondere wobei der Bereich der Berührung des ersten Gehäuseteils (8) mit dem zweiten Gehäuseteil (19) in axialer Richtung weiter ausgedehnt ist als in radialer Richtung,
und/oder dass
die Welle (2) mit der Rotorwelle des Elektromotors drehfest verbunden ist,
und/oder dass
die Welle (2) an ihrem der Rotorwelle zugewandten axialen Endbereich in Umfangsrichtung voneinander beabstandete Klauen aufweist,
wobei ein Kupplungsteil (10) drehfest mit der Rotorwelle verbunden ist, insbesondere mittels Passfederverbindung,
wobei das Kupplungsteil (10) an seinem der Welle (2) zugewandten axialen Endbereich in Umfangsrichtung voneinander beabstandete Klauen aufweist,
wobei der von den Klauen des Kupplungsteils (10) in axialer Richtung überdeckte Bereich mit dem von den Klauen der Welle (2) in axialer Richtung überdeckten Bereich überlappt,
insbesondere wobei die Klauen des Kupplungsteils (10) einen auf die Drehachse der Welle (2) bezogenen Radialabstandsbereich überdecken, welcher auch von den Klauen der Welle (2) überdeckt wird.

11. Antrieb nach einem der vorangegangenen Ansprüche,
**dadurch gekennzeichnet, dass**
der Bremsbelagträger (6) relativ zur Welle (2) axial bewegbar angeordnet ist, insbesondere wobei auf die Welle (2) ein Mitnehmer (23) aufgesteckt ist, der in Umfangsrichtung formschlüssig mit der Welle (2) verbunden ist und/oder der mittels einer Passfederverbindung formschlüssig mit der Welle (2) verbunden ist,
wobei der Mitnehmer (23) eine Außenverzahnung aufweist, welche mit der Innenverzahnung des Bremsbelagträgers im Eingriff ist,
und/oder dass
eine Ankerscheibe (5) der Bremsanordnung mit dem Magnetkörper (3) drehfest verbunden ist und axial bewegbar verbunden ist,
wobei am Magnetkörper (3) abgestützte Federelemente (30) auf die Ankerscheibe (5) drücken, insbesondere die Ankerscheibe (5) mit Federkraft beaufschlagen,
wobei die Ankerscheibe (5) zwischen, insbesondere axial zwischen, dem Magnetkörper (3) und dem Bremsbelagträger (6) angeordnet ist,
insbesondere wobei der Magnetkörper (3) und/oder die Ankerscheibe (5) aus ferromagnetischem Material gefertigt ist.

12. Antrieb nach einem der vorangegangenen Ansprüche,
**dadurch gekennzeichnet, dass**
eine Reibscheibe (7) der Bremsanordnung mit dem Magnetkörper (3) verbunden ist, insbesondere mittels Bolzen, welche in den Magnetkörper (3) hineinragen und die Ankerscheibe (5) führen,
insbesondere wobei die Reibscheibe (7) mit dem ersten Gehäuseteil (8) verbunden ist.

13. Antrieb nach einem der vorangegangenen Ansprüche,
**dadurch gekennzeichnet, dass**
die Bremse, umfassend den Magnetkörper (3), die Spule (4), die Federelemente (30), die Ankerscheibe (5), den Bremsbelagträger (6), die Reibscheibe (7) und Bolzen vorkomplettiert ausgebildet ist
und/oder dass
der Magnetkörper (3), die Spule (4), die Federelemente (30), die Ankerscheibe (5), der Bremsbelagträger (6), die Reibscheibe (7) und Bolzen vom aus dem ersten und zweiten Gehäuseteil (8) gebildeten Gehäuse umgeben und/oder eingehaust sind.

14. Antrieb nach einem der vorangegangenen Ansprüche,
**dadurch gekennzeichnet, dass**
in einer ersten Drehstellung des Drehteils der exzentrische Bereich die Ankerscheibe (5) entgegen der von den Federelementen (30) erzeugten Federkraft zum Magnetkörper (3) hin drückt und in einer zweiten Drehstellung des Drehteils die Ankerscheibe (5) derart in axialer Richtung, also in Richtung der Drehachse der Welle (2), bewegbar ist, dass die Ankerscheibe (5) den Bremsbelagträger (6) auf die Reibscheibe (7) drückt, insbesondere bei unbestromter Spule (4),
insbesondere wobei das Drehteil mit einem Haltebügel verbunden ist, insbesondere wobei der Haltebügel sich zumindest abschnittsweise, insbesondere bezogen auf die Drehachse der Welle (2), tangential und/oder in Umfangsrichtung erstreckt.

15. Antrieb nach einem der vorangegangenen Ansprüche,
**dadurch gekennzeichnet, dass**
mit dem zweiten Gehäuseteil (19) ein Flanschteil (1) verbunden ist, welches eine Öffnung des Getriebegehäuses abdeckt und/oder insbesondere öldicht verschließt,
und/oder dass
eine erste Leiterplatte (12) drehfest mit dem ersten Gehäuseteil (8) verbunden ist,
wobei eine zweite, insbesondere also weitere, Leiterplatte drehfest mit der Welle (2) verbunden ist,
wobei die erste Leiterplatte (12) derart mit elektronischen Bauelementen bestückt ist, dass die Winkellage der zweiten Leiterplatte und/oder der Welle (2) detektierbar ist,
insbesondere wobei die erste Leiterplatte (12) parallel zur zweiten Leiterplatte angeordnet ist und/oder wobei die erste Leiterplatte (12) von der Reibscheibe (7) an das erste Gehäuseteil (8) angedrückt wird, insbesondere wobei die zweite Leiterplatte axial zwischen der ersten Leiterplatte (12) und dem ersten Gehäuseteil (8) angeordnet ist,
und/oder dass
ein Sensor zur Detektion des Bremsbelagverschleißes im aus dem ersten und zweiten Gehäuseteil (8) gebildeten Gehäuse angeordnet ist,
insbesondere wobei die Sensorleitungen durch die Kabeldurchführung (14) durchgeführt sind,
und/oder dass
zwischen dem ersten Gehäuseteil (8) und der Welle (2) ein Ringspalt angeordnet ist,
insbesondere dessen axiale Länge größer als der Radius des Ringspalts ist,
wobei der Ringspalt auf der vom Magnetkörper (3) und/oder vom zweiten Lager (20) abgewandten Seite des ersten Lagers (9) angeordnet ist, insbesondere auf der vom Magnetkörper (3) und/oder vom zweiten Lager (20) in axialer Richtung abgewandten Seite des ersten Lagers (9) angeordnet ist,
und/oder dass
das zweite Lager (20) als Doppellager ausgeführt ist, insbesondere wobei das zweite Lager (20) zumindest ein Zylinderrollenlager aufweist,
und/oder dass
zwischen dem zweiten Gehäuseteil (19) und der Welle (2) ein weiterer Ringspalt angeordnet ist,
insbesondere dessen axiale Länge größer als der Radius des weiteren Ringspalts ist,
wobei das zweite Lager (20) auf der vom Magnetkörper (3) und/oder vom ersten Lager (9) abgewandten Seite des weiteren Ringspalts angeordnet ist, insbesondere auf der vom Magnetkörper (3) und/oder vom ersten Lager (9) in axialer Richtung abgewandten Seite des weiteren Ringspalts angeordnet ist.

## Claims

1. A drive, having: a gear unit with a gear unit housing; an electromagnetically actuated braking arrangement; and an electric motor,
wherein the braking arrangement is arranged between the gear unit and the electric motor,
wherein in a first housing part (8) of the braking arrangement there is received a first bearing (9) and in a second housing part (19) of the braking arrangement a second bearing (20),
wherein a shaft (2) is rotatably mounted by means of the first and second bearings (20),
wherein the shaft (2) is connected non-rotatably to a gearing part of the gear unit, in particular to a gearing part, in particular slip-on pinion, of the first gear stage of the gear unit, or is embodied in one piece, in particular therefore in one part, with this gearing part,
wherein the shaft (2) protrudes through a magnet body (3), in particular through a ferromagnetic coil body, of the braking arrangement,
wherein the shaft (2) is connected non-rotatably to a brake lining carrier (6) which is arranged in the axial direction between the first and the second bearing (20),
wherein the brake lining carrier (6) is arranged so as to be displaceable relative to the shaft (2), in particular parallel to the axis of rotation of the shaft (2),
**characterised in that**
in the first housing part (8) there is arranged a cable bushing (14) which has a screw nut and a sealing element (70), with the sealing element (70) being inserted into a stepped bore and the screw nut being screwed into a threaded bore in the first housing part (8),
with the threaded bore being oriented coaxially with the stepped bore,
with the screw nut being positioned on the sealing element (70),
in particular with the sealing element (70) being manufactured from rubber or from plastics material,
with the sealing element (70) having continuous cutouts through each of which either a cable is guided or a pin (74) protrudes,
with the cutouts being oriented in each case parallel to the bore axis of the cylindrical bore,
with one of the cutouts having a larger clear internal diameter than another one of the cutouts.

2. A drive according to claim 1,
**characterised in that**
each of the cutouts has in each case at least one constriction (73) which is deformed by the respective cable or by the respective pin (74).

3. A drive according to claim 1 or 2,
**characterised in that**
the sealing element (70) is barrel-shaped and/or has at least one convex, in particular barrel-shaped, surface region (72).

4. A drive according to one of the preceding claims,
**characterised in that**
the sealing element (70) is adjusted against a step of the stepped bore.

5. A drive according to one of the preceding claims,
**characterised in that**
to the outside of the first housing part (8) is connected a lower part (15) on which a cover (17) is placed, so that electrical connection devices (16) are arranged and encased in the terminal box thus formed from the lower part (15) and the cover (17),
with electric lines being guided through the explosion-pressure resistant cable bushing (14), which is arranged in a continuous cutout in the first housing part (8),
in particular with the maximum pressure of the explosion-pressure resistant cable bushing (14) being 3 bar or more.

6. A drive according to one of the preceding claims,
**characterised in that**
a rotary part is rotatably mounted relative to the first housing part (8), in particular about an axis of rotation which is oriented perpendicularly to the axis of rotation of the shaft (2),
with a screw bush (50) being screwed by its external thread into a threaded bore which passes through the first housing part (8) and the rotary part being received and rotatably mounted in the screw bush (50), with the rotary part protruding out of the screw bush (50) on either side,
with the rotary part having an eccentric region which is in an operative connection with an armature disc (5) of the braking arrangement, in particular for manually actuated release of the braking arrangement.

7. A drive according to one of the preceding claims,
**characterised in that**
the screw bush (50) is manufactured from a softer material than the rotary part,
in particular with the rotary part being manufactured from a hardened steel and the screwing part, in particular the screw bush (50), from a copper-containing material, in particular from a copper alloy and/or from brass.

8. A drive according to one of the preceding claims,
**characterised in that**
the rotary part has a collar region (63), in particular a collar region (63) designed to run around uninterrupted in the circumferential direction relative to the axis of rotation of the rotary part,
with the collar region (63) being positioned on the screwing part,
in particular with the collar region (63) protruding from the rotary part in the radial direction relative to the axis of rotation of the rotary part, and/or with the collar region (63) being arranged axially between the non-round region, in particular portion, and the round, in particular cylindrical, region, in particular portion, of the rotary part.

9. A drive according to one of the preceding claims,
**characterised in that**
the rotary part has a non-round dome region which protrudes into a cutout in a bracket (21), in particular for non-rotatably connecting the bracket (21) to the rotary part,
and/or **in that**
a restoring spring supported on the first housing part (8) is connected to the bracket (21),
in particular with the restoring spring having a spiral spring and/or being produced from a wire, the first end of which is bent over and/or inserted into a cutout in the bracket (21) and the second end of which into a first housing part (8).

10. A drive according to one of the preceding claims,
**characterised in that**
the first housing part (8) is connected to the second housing part (19),
in particular with the region of the contact of the first housing part (8) with the second housing part (19) being extended further in the axial direction than in the radial direction,
and/or **in that**
the shaft (2) is connected non-rotatably to the rotor shaft of the electric motor,
and/or **in that**
the shaft (2) has on its axial end region which faces the rotor shaft claws which are spaced apart from each other in the circumferential direction,
with a coupling part (10) being connected non-rotatably to the rotor shaft, in particular by means of a feather-key connection,
with the coupling part (10) on its axial end region which faces the shaft (2) having claws which are spaced apart from each other in the circumferential direction,
with the region covered in the axial direction by the claws of the coupling part (10) overlapping with the region covered in the axial direction by the claws of the shaft (2),
in particular with the claws of the coupling part (10) covering a radial distance region relative to the axis of rotation of the shaft (2) which is also covered by the claws of the shaft (2).

11. A drive according to one of the preceding claims,
**characterised in that**
the brake lining carrier (6) is arranged axially movably relative to the shaft (2), in particular with there being mounted on the shaft (2) a driving element (23) which in the circumferential direction is connected in a form-fit to the shaft (2) and/or which is connected in a form-fit to the shaft (2) by means of a feather-key connection,
with the driving element (23) having external gearing which meshes with the internal gearing of the brake lining carrier,
and/or **in that**
an armature disc (5) of the braking arrangement is connected non-rotatably and is connected axially movably to the magnet body (3),
with spring elements (30) supported on the magnet body (3) pressing on the armature disc (5), in particular applying spring force to the armature disc (5),
with the armature disc (5) being arranged between, in particular axially between, the magnet body (3) and the brake lining carrier (6),
in particular with the magnet body (3) and/or the armature disc (5) being manufactured from ferromagnetic material.

12. A drive according to one of the preceding claims,
**characterised in that**
a friction disc (7) of the braking arrangement is connected to the magnet body (3), in particular by means of bolts which protrude into the magnet body (3) and guide the armature disc (5),
in particular with the friction disc (7) being connected to the first housing part (8).

13. A drive according to one of the preceding claims,
**characterised in that**
the brake, comprising the magnet body (3), the coil (4), the spring elements (30), the armature disc (5), the brake lining carrier (6), the friction disc (7) and bolts, is formed preassembled
and/or **in that**
the magnet body (3), the coil (4), the spring elements (30), the armature disc (5), the brake lining carrier (6), the friction disc (7) and bolts are surrounded and/or encased by the housing formed from the first and second housing part (8).

14. A drive according to one of the preceding claims,
**characterised in that**
in a first rotary position of the rotary part the eccentric region presses the armature disc (5), counter to the spring force generated by the spring elements (30), towards the magnet body (3), and in a second rotary position of the rotary part the armature disc (5) is movable in the axial direction, i.e. in the direction of the axis of rotation of the shaft (2), such that the armature disc (5) presses the brake lining carrier (6) onto the friction disc (7), in particular when the coil (4) is non-energised,
in particular with the rotary part being connected to a holding bracket, in particular with the holding bracket extending at least in portions, in particular relative to the axis of rotation of the shaft (2), tangentially and/or in the circumferential direction.

15. A drive according to one of the preceding claims,
**characterised in that**
to the second housing part (19) there is connected a flange part (1) which covers an opening in the gear unit housing and/or closes it in particular in an oil-tight manner,
and/or **in that**
a first printed circuit board (12) is connected non-rotatably to the first housing part (8),
with a second, in particular therefore further, printed circuit board being connected non-rotatably to the shaft (2),
with the first printed circuit board (12) being equipped with electronic components such that the angular position of the second printed circuit board and/or of the shaft (2) is detectable,
in particular with the first printed circuit board (12) being arranged parallel to the second printed circuit board, and/or with the first printed circuit board (12) being pressed against the first housing part (8) by the friction disc (7), in particular with the second printed circuit board being arranged axially between the first printed circuit board (12) and the first housing part (8),
and/or **in that**
a sensor for detecting the brake lining wear is arranged in the housing formed from the first and second housing parts (8),
in particular with the sensor lines being guided through the cable bushing (14),
and/or **in that**
an annular gap is arranged between the first housing part (8) and the shaft (2),
in particular the axial length of which is greater than the radius of the annular gap,
with the annular gap being arranged on that side of the first bearing (9) which faces away from the magnet body (3) and/or from the second bearing (20), in particular being arranged on that side of the first bearing (9) which faces away from the magnet body (3) and/or from the second bearing (20) in the axial direction,
and/or **in that**
the second bearing (20) is embodied as a duplex bearing, in particular with the second bearing (20) having at least one cylindrical roller bearing,
and/or **in that**
a further annular gap is arranged between the second housing part (19) and the shaft (2),
in particular the axial length of which is greater than the radius of the further annular gap,
with the second bearing (20) being arranged on that side of the further annular gap which faces away from the magnet body (3) and/or from the first bearing (9), in particular being arranged on that side of the further annular gap which faces away from the magnet body (3) and/or from the first bearing (9) in the axial direction.

## Revendications

1. Entraînement comprenant une transmission avec un carter de transmission, un ensemble de freinage à commande électromagnétique et un moteur électrique, l'ensemble de freinage étant agencé entre la transmission et le moteur électrique,
un premier palier (9) étant accueilli dans une première partie de carter (8) de l'ensemble de freinage et un second palier (20) étant accueilli dans une seconde partie de carter (19) de l'ensemble de freinage,
un arbre (2) étant monté rotatif au moyen des premier et second paliers (20),
l'arbre (2) étant relié de manière solidaire en rotation à une partie formant denture de la transmission, en particulier à une partie formant denture, en particulier à un pignon creux, du premier étage de transmission de la transmission, ou étant réalisé d'un seul tenant, en particulier d'une seule pièce, avec ladite partie formant denture,
l'arbre (2) traversant un corps magnétique (3), en particulier un corps de bobine ferromagnétique, de l'ensemble de freinage,
l'arbre (2) étant relié de manière solidaire en rotation à un support de garniture de frein (6) qui est agencé dans la direction axiale entre les premier et second paliers (20), le support de garniture de frein (6) étant agencé de manière à pouvoir coulisser par rapport à l'arbre (2), en particulier parallèlement à l'axe de rotation de l'arbre (2), **caractérisé en ce que**
un passage de câble (14) est agencé dans la première partie de carter (8), lequel passage de câble présente un écrou et un élément d'étanchéité (70), l'élément d'étanchéité (70) étant enfiché dans un alésage étagé et l'écrou étant vissé dans un alésage fileté de la première partie de carter (8),
l'alésage fileté étant aligné coaxialement par rapport à l'alésage étagé,
l'écrou reposant sur l'élément d'étanchéité (70),
l'élément d'étanchéité (70) étant en particulier en caoutchouc ou en plastique,
l'élément d'étanchéité (70) présentant des évidements traversants à travers lesquels passe respectivement un câble ou une broche (74),
les évidements étant respectivement orientés parallèlement à l'axe d'alésage de l'alésage cylindrique,
un des évidements présentant un diamètre intérieur libre supérieur à celui d'un autre des évidements.

2. Entraînement selon la revendication 1,
**caractérisé en ce que**
chacun des évidements présente respectivement au moins un rétrécissement (73) qui est déformé par le câble respectif ou par la broche (74) respective.

3. Entraînement selon la revendication 1 ou 2,
**caractérisé en ce que**
l'élément d'étanchéité (70) est formé en forme de tonneau et/ou présente au moins une région de surface (72) convexe, en particulier en forme de tonneau.

4. Entraînement selon l'une quelconque des revendications précédentes,
**caractérisé en ce que**
l'élément d'étanchéité (70) est appliqué contre un étage de l'alésage étagé.

5. Entraînement selon l'une quelconque des revendications précédentes,
**caractérisé en ce que**
une partie inférieure (15) sur laquelle est placé un couvercle (17) est reliée au côté extérieur de la première partie de carter (8), de sorte que des dispositifs de raccordement électrique (16) sont agencés et enfermés dans le boîtier de raccordement formé par la partie inférieure (15) et le couvercle (17),
des câbles électriques étant guidés à travers le passage de câble antidéflagrant (14) qui est agencé dans un évidement traversant de la première partie de carter (8),
la pression maximale du passage de câble antidéflagrant (14) étant en particulier supérieur ou égale à 3 bars.

6. Entraînement selon l'une quelconque des revendications précédentes,
**caractérisé en ce que**
une partie rotative est montée rotative par rapport à la première partie de carter (8), en particulier autour d'un axe de rotation orienté perpendiculairement à l'axe de rotation de l'arbre (2),
une douille filetée (50) étant vissée par son filetage extérieur dans un alésage fileté traversant la première partie de carter (8) et la partie rotative étant accueillie et montée rotative dans la douille filetée (50), la partie rotative faisant saillie des deux côtés de la douille filetée (50),
la partie rotative présentant une région excentrée qui est en liaison active avec un disque d'induit (5) de l'ensemble de freinage, en particulier en vue d'une ventilation actionnée manuellement de l'ensemble de freinage.

7. Entraînement selon l'une quelconque des revendications précédentes,
**caractérisé en ce que**
la douille filetée (50) est fabriquée à partir d'un matériau plus tendre que celui de la pièce rotative,
la pièce rotative étant en particulier fabriquée en acier trempé et la pièce filetée, en particulier la douille filetée (50), étant fabriquée à partir d'un matériau contenant du cuivre, en particulier à partir d'un alliage de cuivre et/ou à partir de laiton.

8. Entraînement selon l'une quelconque des revendications précédentes,
**caractérisé en ce que**
la partie rotative présente une région de collerette (63), en particulier une région de collerette (63) formée de manière continue dans la direction circonférentielle par rapport à l'axe de rotation de la partie rotative,
la région de collerette (63) reposant sur la pièce filetée,
la région de collerette (63) faisant en particulier saillie au niveau de la partie rotative dans la direction radiale par rapport à l'axe de rotation de la partie rotative et/ou la région de collerette (63) étant agencée axialement entre la région, en particulier la section, non ronde, et la région, en particulier la section, ronde, en particulier cylindrique, de la partie rotative.

9. Entraînement selon l'une quelconque des revendications précédentes,
**caractérisé en ce que**
la partie rotative présente une région en dôme non ronde qui pénètre dans un évidement d'un étrier (21), en particulier en vue d'une liaison solidaire en rotation de l'étrier (21) avec la partie rotative,
et/ou **en ce que**
un ressort de rappel s'appuyant sur la première partie de carter (8) est relié à l'étrier (21),
le ressort de rappel présentant en particulier un ressort en spirale et/ou étant fabriqué à partir d'un fil dont la première extrémité est pliée et/ou insérée dans un évidement de l'étrier (21) et dont la seconde extrémité l'est dans une première partie de carter (8).

10. Entraînement selon l'une quelconque des revendications précédentes,
**caractérisé en ce que**
la première partie de carter (8) est reliée à la seconde partie de carter (19),
la région de contact de la première partie de carter (8) avec la seconde partie de carter (19) étant en particulier plus étendue dans la direction axiale que dans la direction radiale,
et/ou **en ce que**
l'arbre (2) est relié de manière solidaire en rotation à l'arbre de rotor du moteur électrique,
et/ou **en ce que**
l'arbre (2) présente des griffes espacées les unes des autres dans la direction circonférentielle au niveau de sa région d'extrémité axiale tournée vers l'arbre de rotor, une partie d'accouplement (10) étant reliée de manière solidaire en rotation à l'arbre de rotor, en particulier au moyen d'une liaison à clavette,
la partie d'accouplement (10) présentant des griffes espacées les unes des autres dans la direction circonférentielle au niveau de sa région d'extrémité axiale tournée vers l'arbre (2),
la région recouverte par les griffes de la partie d'accouplement (10) dans la direction axiale recouvrant la région recouverte par les griffes de l'arbre (2) dans la direction axiale,
les griffes de la partie d'accouplement (10) recouvrant en particulier une région d'espacement radial par rapport à l'axe de rotation de l'arbre (2) qui est également recouverte par les griffes de l'arbre (2).

11. Entraînement selon l'une quelconque des revendications précédentes,
**caractérisé en ce que**
le support de garniture de frein (6) est agencé de manière à pouvoir être déplacé axialement par rapport à l'arbre (2), un entraîneur (23), qui est relié à l'arbre (2) avec blocage par complémentarité de forme dans la direction circonférentielle et/ou qui est relié à l'arbre (2) avec blocage par complémentarité de forme au moyen d'une liaison à clavette, étant en particulier enfiché sur l'arbre (2),
l'entraîneur (23) présentant une denture extérieure qui est en prise avec la denture intérieure du support de garniture de frein,
et/ou **en ce que**
un disque d'induit (5) de l'ensemble de freinage est relié au corps magnétique (3) de manière solidaire en rotation et de manière mobile axialement,
des éléments formant ressort (30) supportés au niveau du corps magnétique (3) appuyant sur le disque d'induit (5), en particulier sollicitant le disque d'induit (5) avec une force de ressort,
le disque d'induit (5) étant agencé entre, en particulier de manière axiale entre, le corps magnétique (3) et le support de garniture de frein (6),
le corps magnétique (3) et/ou le disque d'induit (5) étant en particulier fabriqués à partir d'un matériau ferromagnétique.

12. Entraînement selon l'une quelconque des revendications précédentes,
**caractérisé en ce que**
un disque de friction (7) de l'ensemble de freinage est relié au corps magnétique (3), en particulier au moyen de boulons qui font saillie dans le corps magnétique (3) et qui guident le disque d'induit (5),
le disque de friction (7) étant en particulier relié à la première partie de carter (8).

13. Entraînement selon l'une quelconque des revendications précédentes,
**caractérisé en ce que**
le frein, comprenant le corps magnétique (3), la bobine (4), les éléments formant ressort (30), le disque d'induit (5), le support de garniture de frein (6), le disque de friction (7) et les boulons, est réalisé de manière pré-complétée
et/ou **en ce que**
le corps magnétique (3), la bobine (4), les éléments formant ressort (30), le disque d'induit (5), le support de garniture de frein (6), le disque de friction (7) et les boulons sont entourés et/ou enfermés dans le carter formé par les première et seconde parties de carter (8).

14. Entraînement selon l'une quelconque des revendications précédentes,
**caractérisé en ce que**
dans une première position de rotation de la partie rotative, la région excentrée pousse le disque d'induit (5) vers le corps magnétique (3) à l'encontre de la force de ressort générée par les éléments formant ressort (30) et, dans une seconde position de rotation de la partie rotative, le disque d'induit (5) peut être déplacé dans la direction axiale, c'est-à-dire dans la direction de l'axe de rotation de l'arbre (2), de telle manière que le disque d'induit (5) pousse le support de garniture de frein (6) sur le disque de friction (7), en particulier lorsque la bobine (4) n'est pas alimentée,
la partie rotative est en particulier reliée à un étrier de retenue, l'étrier de retenue s'étendant en particulier au moins par sections, en particulier par rapport à l'axe de rotation de l'arbre (2), de manière tangentielle et/ou dans la direction circonférentielle.

15. Entraînement selon l'une quelconque des revendications précédentes,
**caractérisé en ce que**
une partie bride (1), qui recouvre et/ou ferme de manière étanche à l'huile un orifice du carter de transmission, est reliée à la seconde partie de carter (19),
et/ou **en ce que**
une première carte électronique (12) est reliée de manière solidaire en rotation à la première partie de carter (8),
une seconde, en particulier une autre, carte électronique étant reliée de manière solidaire en rotation à l'arbre (2),
la première carte électronique (12) étant équipée de composants électroniques de telle manière que la position angulaire de la seconde carte électronique et/ou de l'arbre (2) peut être détectée,
la première carte électronique (12) étant en particulier agencée parallèlement à la seconde carte électronique et/ou la première carte électronique (12) étant pressée par le disque de friction (7) contre la première partie de carter (8), la seconde carte électronique étant en particulier agencée axialement entre la première carte électronique (12) et la première partie de carter (8),
et/ou **en ce que**
un capteur permettant de détecter l'usure des garnitures de frein est agencé dans le carter formé par les première et seconde parties de carter (8),
les câbles de capteur étant en particulier traversés par le passage de câble (14),
et/ou **en ce que**
un espace annulaire est agencé entre la première partie de carter (8) et l'arbre (2), en particulier dont la longueur axiale est supérieure au rayon de l'espace annulaire, l'espace annulaire étant agencé sur le côté du premier palier (9) qui est opposé au corps magnétique (3) et/ou au second palier (20), en particulier sur le côté du premier palier (9) qui est opposé au corps magnétique (3) et/ou au second palier (20) dans la direction axiale,
et/ou **en ce que**
le second palier (20) est réalisé sous la forme d'un palier double, le second palier (20) présentant en particulier au moins un palier à rouleaux cylindriques,
et/ou **en ce que**
un espace annulaire supplémentaire est agencé entre la première partie de carter (19) et l'arbre (2),
en particulier dont la longueur axiale est supérieure au rayon de l'espace annulaire supplémentaire,
le second palier (20) étant agencé sur le côté de l'espace annulaire supplémentaire qui est opposé au corps magnétique (3) et/ou au premier palier (9), en particulier sur le côté de l'espace annulaire supplémentaire qui est opposé au corps magnétique (3) et/ou au premier palier (9) dans la direction axiale.
